Europäisches Patentamt

European Patent Office

Office européen des brevets

(11) Numéro de publication : **0 349 437 B1**

(12) **FASCICULE DE BREVET EUROPEEN**

(45) Date de publication du fascicule du brevet :
**30.09.92 Bulletin 92/40**

(51) Int. Cl.$^5$ : **G01G 17/04,** G01G 5/02,
G01N 9/12, C02F 3/00

(21) Numéro de dépôt : **89401874.6**

(22) Date de dépôt : **29.06.89**

(54) **Appareil de mesure automatique du poids apparent d'une boue chargeant un liquide, système de mesure automatique de l'indice de PONSAR d'une telle boue, utilisant l'appareil et application à la conduite de stations d'épuration d'eaux usées.**

(30) Priorité : **30.06.88 FR 8808840**

(43) Date de publication de la demande :
**03.01.90 Bulletin 90/01**

(45) Mention de la délivrance du brevet :
**30.09.92 Bulletin 92/40**

(84) Etats contractants désignés :
**BE CH DE GB LI NL**

(56) Documents cités :
**EP-A- 0 210 916
EP-A- 0 296 029
DE-A- 2 103 166
FR-A- 839 703
FR-A- 2 318 116
FR-A- 2 553 752
US-A- 3 666 419**

(73) Titulaire : **COMMISSARIAT A L'ENERGIE ATOMIQUE Etablissement de Caractère Scientifique Technique et Industriel
31/33, rue de la Fédération
F-75015 Paris (FR)**

(72) Inventeur : **Castex, Paul
31 rue Cavendish
F-75019 Paris (FR)**
Inventeur : **Boullet, Joseph
16 La Croix d'Andolle
F-60440 Nanteuil le Haudouin (FR)**
Inventeur : **Gomber, Henri
1, Allée des Grands Jardins Chalifert
F-77144 Montevrain (FR)**
Inventeur : **Henry, Bruno
8 rue Chateau Landon
F-75010 Paris (FR)**

(74) Mandataire : **Mongrédien, André et al
c/o BREVATOME 25, rue de Ponthieu
F-75008 Paris (FR)**

# Description

La présente invention concerne un appareil de mesure automatique du poids apparent d'une boue chargeant un liquide et un système de mesure automatique de l'indice de PONSAR d'une telle boue, utilisant l'appareil. Elle s'applique notamment à la conduite de stations d'épuration d'eaux usées fonctionnant sur le principe des boues activées (épuration biologique).

On connaît déjà, par le brevet FR-A-2 284 108, un dispositif de mesure de l'indice de PONSAR d'une boue chargeant un liquide, indice dont on donnera par la suite une définition. Un tel dispositif est également commercialisé par la société HYDROCURE.

Ce dispositif présente l'inconvénient d'être manuel, nécessitant ainsi une intervention assez longue, et donc coûteuse, d'un opérateur.

On connaît également, par le brevet FR-A-2585467 appelé par la suite "document I", un appareil de mesure automatique du poids apparent d'une boue chargeant un liquide et un système de mesure automatique de l'indice de PONSAR d'une telle boue, utilisant l'appareil. Ce dernier comprend un selfmètre pour déterminer le poids apparent de la boue par des mesures d'inductance.

La présente invention a pour but de remédier à l'inconvénient mentionné plus haut en proposant un appareil de mesure automatique du poids apparent d'une boue chargeant un liquide et un système de mesure automatique de l'indice de PONSAR d'une telle boue, utilisant ledit appareil, ce dernier comprenant des moyens de type optoélectronique pour mesurer le poids apparent de la boue, moyens qui permettent d'aboutir à un appareil et à un système plus simples que ceux qui sont décrits dans le document I.

De façon précise, la présente invention a tout d'abord pour objet un appareil de mesure du poids apparent d'une boue chargeant un liquide, comprenant :

 – un récipient,
 – un flacon mobile, muni d'un moyen lui permettant d'atteindre, dans le récipient, rempli de liquide clarifié, deux positions d'équilibre correspondant respectivement au flacon rempli de liquide clarifié et au flacon rempli de liquide chargé de boue,
 – des moyens de remplissage en liquide clarifié, de remplissage en liquide chargé de boue et de vidange du flacon,
 – des moyens de remplissage en liquide clarifié du récipient, jusqu'à un niveau maximum prédéterminé, et de vidange de ce récipient,
 – des premiers moyens de détection, aptes à fournir un signal électrique fonction de la position d'équilibre du flacon dans le récipient, et
 – un système électronique de traitement prévu pour déterminer le poids apparent d'un volume de liquide chargé de boue, pesé dans le liquide clarifié, à partir de signaux électriques correspondant aux positions d'équilibre, dans le récipient rempli de liquide clarifié, du flacon rempli respectivement de liquide chargé de boue et de liquide clarifié, en commandant de façon appropriée les moyens de remplissage et de vidange du récipient et du flacon, caractérisé en ce que le flacon est en outre conçu pour que son bord supérieur se stabilise sous le niveau de liquide clarifié remplissant le récipient, en ce que les moyens de remplissage et de vidange du flacon sont prévus pour remplir celui-ci lorsqu'il est au fond du récipient de sorte que le flacon atteint ses positions d'équilibre à partir du fond du récipient, en ce que les premiers moyens de détection sont de type optoélectronique et prévus pour fournir ledit signal électrique après stabilisation du flacon dans le liquide clarifié et seulement lorsque le remplissage du récipient est terminé, la détermination du poids apparent étant ainsi effectuée en régime hydrostatique vrai.

On connaît déjà un appareil de mesure automatique du poids apparent d'une boue chargeant un liquide, par le document EP-A-0296029 dont la date de dépôt est antérieure à celle de la présente demande mais qui n'a été publié qu'à une date postérieure.

Dans la présente invention, le récipient est rempli "complètement" ou plus exactement jusqu'à un niveau maximum prédéterminé, qui est le même pour l'équilibre relatif au flacon rempli de liquide clarifié que pour l'équilibre relatif au flacon rempli de liquide chargé de boue et l'on détermine les positions d'équilibre du flacon, après stabilisation de celui-ci dans le liquide clarifié, seulement lorsque le remplissage du récipient est terminé. L'appareil, objet de l'invention, permet ainsi d'effectuer des mesures en régime hydrostatique vrai, où l'équilibre du flacon a lieu sous la seule action d'un poids et d'une poussée d'Archimède.

De préférence, le flacon muni dudit moyen est conçu pour avoir, lorsqu'il est rempli de liquide clarifié ou de liquide chargé de boue, un centre de poussée qui est situé au-dessus et à la verticale de son centre de gravité. Ceci permet, au flacon de monter verticalement dans le liquide clarifié contenu dans le récipient et donc sans avoir à être guidé, d'où une limitation des frottements susceptibles de perturber la stabilisation du flacon à ses positions d'équilibre.

On rappelle que le centre de poussée est le point d'application de la résultante des forces extérieures (poids, forces de pression).

De préférence également, le flacon est en un matériau qui, lorsqu'il est plongé dans le liquide clarifié, n'absorbe pas celui-ci ou, au contraire, se sature rapidement en ce liquide clarifié. Le poids du flacon est ainsi constant dans les deux phases de mesure du poids apparent (flacon rempli d'eau clarifiée et flacon rempli d'eau chargée de boue). Par "matériau qui se sature rapidement", on entend un matériau qui se sature en un temps t très court devant le temps t1 pendant lequel le flacon reste dans le liquide clarifié du récipient (t inférieur a environ 0,1 t1 par exemple).

La paroi externe du flacon peut avantageusement épouser sensiblement la forme d'un ellipsoide de révolution autour de son grand axe, afin d'empêcher le flacon de monter en même temps que le liquide clarifié dans le récipient en cours de remplissage.

De préférence, l'appareil objet de l'invention comprend en outre des moyens de support du flacon au fond du récipient.

Dans une réalisation avantageuse, l'appareil objet de l'invention comprend en outre une sonde à électrodes, prévue pour informer le système électronique de traitement du remplissage du flacon, cette sonde étant déplaçable et rendue rigidement solidaire d'un conduit prévu pour les remplissages et la vidange du flacon lorsque ce dernier se trouve au fond du récipient.

On notera à ce propos que le fait de remplir le flacon lorsqu'il se trouve au fond du récipient contribue à la simplification de l'appareil objet de l'invention par rapport à celui qui est décrit dans le document I et dans lequel le flacon est rempli en haut du récipient, ce qui nécessite une nacelle de support du flacon et un moteur pour déplacer cette nacelle.

Dans la présente invention, pour déplacer la sonde et le conduit, on peut utiliser un vérin à double effet (premier vérin).

Dans une réalisation préférée de l'appareil objet de l'invention, ledit moyen dont est muni le flacon comprend une tige dont l'extrémité inférieure est rigidement solidaire du flacon, et dont la longueur est prévue pour qu'elle puisse dépasser, lorsque le flacon est au fond du récipient, le niveau maximum de liquide clarifie qu'est destiné a contenir le récipient.

De préférence les premiers moyens de détection sont indépendants du flacon et peuvent comprendre :

– un ensemble-détecteur comportant un moyen photo-émetteur et un moyen photodétecteur, rendus solidaires et placés en regard l'un de l'autre, à l'extérieur du récipient et de manière que la lumière que le moyen photo-émetteur est capable d'émettre puisse être captée par le moyen photodétecteur après avoir traversé ce récipient, au moins la partie supérieure du flacon étant opaque à la lumière du moyen photo-émetteur, le récipient étant transparent à cette lumière, et

– des moyens de déplacement de cet ensemble-détecteur, aptes à déplacer celui-ci le long du récipient, sensiblement à partir du haut de ce dernier, et commandés par le système électronique de traitement, le moyen photodétecteur étant destiné à informer ce système électronique de traitement de la position du flacon.

De préférence également, l'appareil objet de l'invention comprend des deuxièmes moyens de détection prévus pour détecter l'atteinte du niveau maximum prédéterminé de liquide clarifié dans le récipient en vue de commander l'arrêt du remplissage de ce récipient.

Ces deuxièmes moyens de détection peuvent comprendre un flotteur prévu pour flotter dans le récipient, à la surface du liquide clarifié, lorsque le récipient en contient, un moyen photo-émetteur et un moyen photodétecteur situés au-dessus du niveau maximum prédéterminé de liquide clarifié qu'est destiné à contenir le récipient, et une tige fixée au flotteur et l'extrémité supérieure de la tige est prévue pour dévier un faisceau lumineux provenant du moyen photo-émetteur en direction du moyen photodétecteur, lorsque cette extrémité supérieure rencontre ce faisceau lumineux.

La présente invention concerne également un système de mesure de l'indice de PONSAR d'une boue chargeant un liquide, comprenant :

– un appareil de mesure du poids apparent de la boue chargeant le liquide,

– un autre récipient,

– des moyens de remplissage en liquide clarifié, de remplissage en liquide chargé de boue et de vidange de cet autre récipient,

– des troisièmes moyens de détection aptes à fournir d'autres signaux électriques, fonctions du niveau de boue décantée dans ledit autre récipient préalablement rempli de liquide clarifié et de liquide chargé de boue,

le système électronique de traitement étant en outre prévu pour déterminer, à partir de ces autres signaux, le volume de boue décantée dans ledit autre récipient, correspondant à une quantité prédéterminée de liquide chargé de boue, et pour déterminer également l'indice de PONSAR de la boue, en utilisant ledit poids apparent et ledit volume de boue décantée, en commandant de façon appropriée les moyens de remplissage et de vidange,

caractérisé en ce que l'appareil de mesure du poids apparent est l'appareil de mesure qui est également objet de l'invention.

Selon un mode de réalisation préféré du système de mesure objet de l'invention, les troisièmes moyens de détection comprennent :

– un autre ensemble-détecteur comportant un moyen photo-émetteur et un moyen photodétecteur, rendus solidaires et placés en regard l'un de l'autre, à l'extérieur dudit autre récipient et de telle manière que la lumière que ce moyen photo-émetteur est capable d'émettre puisse être captée par le moyen photodétecteur associé après avoir traversé ledit autre récipient, ce dernier et le liquide clarifié étant transparents à la lumière du moyen photo-émetteur et la boue étant opaque à cette lumière, et

– des moyens de déplacement de cet autre ensemble-détecteur, aptes à déplacer celui-ci le long dudit autre récipient, à partir du fond de ce dernier, et commandés par le système électronique de traitement, le moyen photodétecteur dudit autre ensemble-détecteur étant destiné à informer ce système électronique de traitement de la position de la surface de séparation entre la boue décantée et le liquide clarifié dans ledit autre récipient.

De préférence, la quantité prédéterminée de liquide chargé de boue résultant de l'adjonction à une quantité donnée de liquide clarifié atteignant un premier niveau dans ledit autre récipient, d'une quantité donnée de liquide chargé de boue atteignant un second niveau dans ledit autre récipient, le système de mesure comprend en outre une autre sonde à électrodes déplaçable entre ces premier et second niveaux et prévue pour informer le système électronique de traitement de l'atteinte, par le liquide, successivement de ces premier et second niveaux, en vue de commander l'arrêt des remplissages correspondants.

Le système de mesure objet de l'invention peut comprendre en outre un autre vérin à double effet, prévu pour déplacer ladite autre sonde entre les premier et second niveaux.

La présente invention concerne enfin un procédé de conduite d'une station d'épuration d'eau usées comprenant :

– au moins un décanteur qui reçoit les eaux usées et dans lequel ces eaux usées se séparent en un liquide boueux et un liquide moins dense que ce dernier,

– un stabilisateur auquel est envoyé le liquide boueux,

– un aérateur auquel est envoyé le liquide moins dense et dans lequel ce liquide moins dense est aéré et agité, et

– au moins un clarificateur auquel est envoyé le liquide de l'aérateur et dans lequel est produit le liquide clarifié, le clarificateur étant en outre relié au stabilisateur de manière à pouvoir transférer la boue susceptible de se trouver dans le clarificateur vers le stabilisateur et ce dernier étant relié à l'aérateur de manière à pouvoir transférer le liquide boueux du stabilisateur vers l'aérateur,

ce procédé étant caractérisé en ce qu'il utilise le système de mesure de l'indice de PONSAR également objet de l'invention et en ce que ce procédé comprend les étapes suivantes :

– à une heure choisie dans un ensemble d'heures de mesure on remplit au moins en partie ledit autre récipient de liquide clarifié issu du clarificateur,

– on contrôle la limpidité de cette eau clarifiée et si cette limpidité n'est pas bonne, on arrête l'arrivée de liquide dans l'aérateur en provenance du décanteur jusqu'à l'heure de mesure suivante,

– si la limpidité est bonne, on mesure ledit volume de boue décantée V dans ledit autre récipient, ledit poids apparent P et l'indice de PONSAR Ip et si l'une de ces mesures ne peut être effectuée une alarme est déclenchée,

– si au contraire toutes ces mesures ont pu être effectuées, on compare V à une valeur X1 déterminée,

– si V est inférieur à X1, on compare Ip à une valeur déterminée Y1,

– si Ip est inférieur à Y1, on attend l'heure de mesure choisie suivante,

– si au contraire Ip est supérieur ou égal à Y1 mais inférieur à Y1+Y2, Y2 étant une valeur déterminée, on augmente l'aération dans l'aérateur jusqu'à l'heure de mesure suivante, alors que si Ip est supérieur à Y1+Y2, on oxygène le liquide de l'aérateur et l'on augmente l'aération de ce dernier jusqu'à l'heure de mesure choisie suivante,

– si V est au contraire supérieur ou égal à X1 mais inférieur à X1+X2, X2 étant une valeur déterminée, on transfère la boue du clarificateur vers le stabilisateur et l'on se branche à l'étape de comparaison de Ip à Y1,

– si au contraire V est supérieur ou égal à X1+X2, on transfère la boue du stabilisateur vers l'aérateur et la boue du clarificateur vers le stabilisateur et l'on se branche à l'étape de comparaison de Ip à Y1.

L'invention sera mieux comprise à la lecture de la description qui suit, d'exemples de réalisation donnés à titre purement indicatif et nullement limitatif, en référence aux dessins annexés, sur lesquels :

– la figure 1 est une vue schématique d'un mode de réalisation particulier du système de mesure automatique de l'indice de PONSAR, objet de l'invention,

– la figure 2 est une vue schématique d'un dispositif de mesure du volume de boue décantée et d'un dispositif de mesure du poids apparent faisant partie de ce système,

– la figure 3 est une vue schématique de circuits hydrauliques que comporte ce système,

– la figure 4 est une vue de dessus schématique et partielle montrant une disposition relative possible d'un ensemble-détecteur et d'un tube de vidange que comporte le dispositif de mesure du volume de boue décantée,

– la figure 5 est une vue de dessus schématique et partielle montrant une disposition relative possible d'un ensemble-détecteur, d'un vérin, d'un conduit et d'un flotteur que comporte le dispositif de mesure du poids apparent,

– la figure 6 est une vue schématique d'un mode de réalisation avantageux du flacon faisant partie de ce dispositif de mesure du poids apparent,

– la figure 7 est une vue schématique d'un exemple de station d'épuration d'eaux usées, et
– la figure 8 est un organigramme d'un exemple de programme de gestion de cette station d'épuration, utilisant le système de mesure automatique de l'indice de PONSAR.

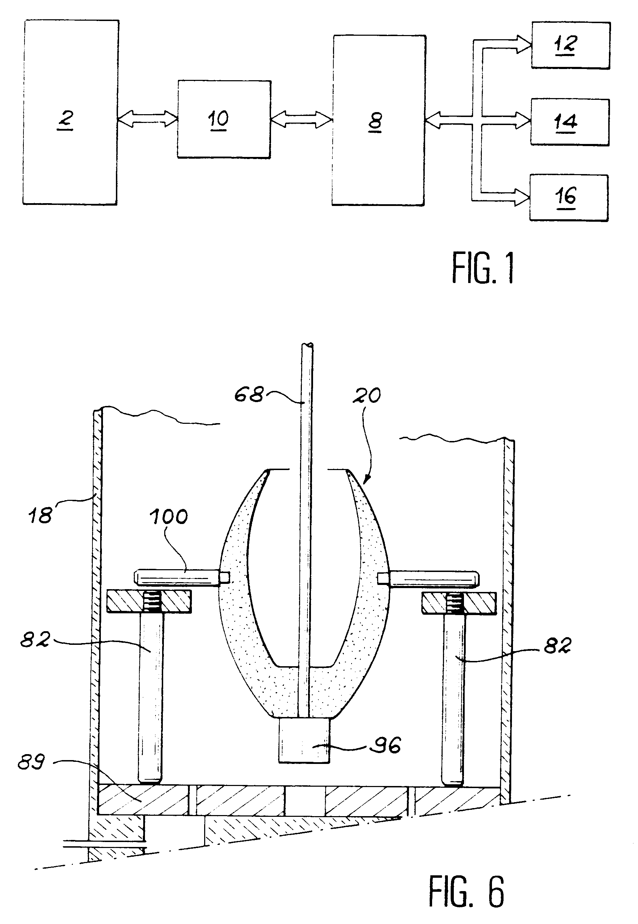

Sur la figure 1, on a représenté schématiquement un mode de réalisation particulier du système objet de l'invention, destiné à la mesure automatique de l'indice de PONSAR.

Cet indice, qui permet de contrôler la qualité des boues des stations d'épuration, et ce, à tous les stades du processus d'épuration, est défini comme le rapport V/P dans lequel V représente le volume tassé en une demi-heure (généralement exprimé en millilitres), c'est-à-dire le volume de dépôt obtenu après décantation pendant une demi-heure d'un litre de liquide chargé de boue dans un litre et demi de liquide clarifié, et P représente le poids apparent (ou plus exactement la masse apparente), exprimé en grammes, d'un litre de liquide chargé de boue, pesé dans le même liquide clarifié.

Le liquide est de l'eau dans le cas d'une station d'épuration et l'on prend dans ce qui suit l'exemple d'une telle station.

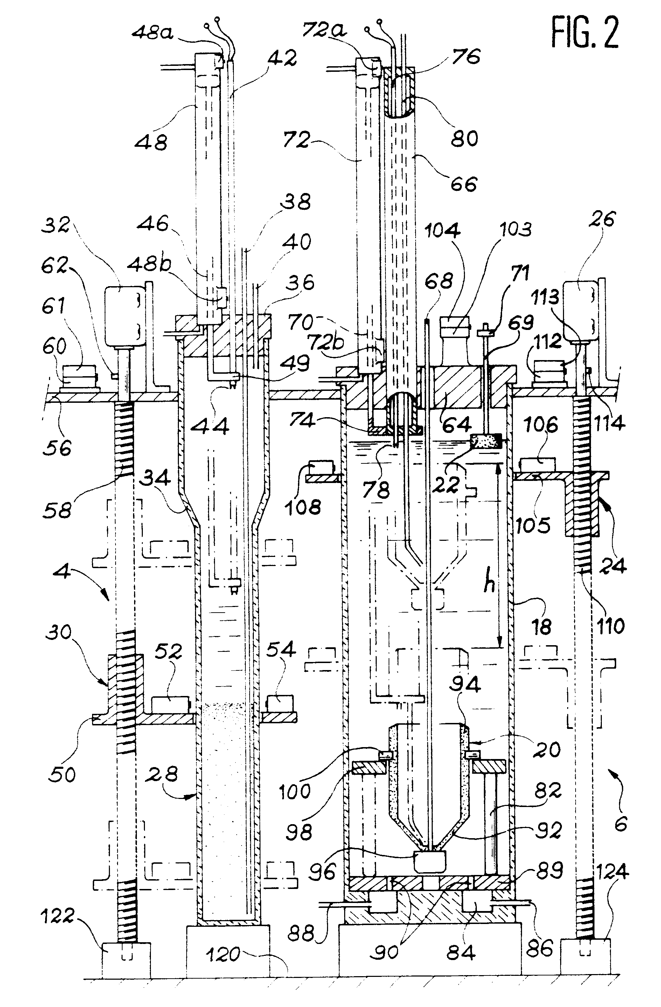

Le système représenté sur la figure 1 comprend :
– un ensemble 2 comportant un dispositif 4 pour la mesure du volume V (figure 2) et un dispositif 6 pour la mesure du poids P (figure 2), cet ensemble pouvant être placé dans une armoire dans laquelle peuvent être également placés une pompe, des électrovannes, et des moteurs prévus pour le fonctionnement de ces dispositifs,
– un ensemble informatique 8 prévu pour commander les dispositifs et calculer l'indice de PONSAR, et
– une interface de puissance 10 assurant la liaison entre l'ensemble informatique 8 et l'ensemble 2 des dispositifs et formant avec cet ensemble informatique un système électronique de traitement.

L'ensemble informatique 8 est également relié à un lecteur de disquettes 12 dans lequel est enregistré le programme permettant le fonctionnement du système de mesure automatique, à un moniteur vidéo 14 permettant l'affichage des résultats des mesures effectuées et à une imprimante 16 permettant de conserver la trace de ces résultats.

Sur la figure 2, on a représenté schématiquement l'ensemble 2 des dispositifs 4 et 6. Le dispositif 6, permettant la mesure du poids apparent, comprend un récipient 18 par exemple cylindrique, de forme allongée et de grande capacité, de l'ordre de 10 litres par exemple, appelé par la suite "réservoir", ainsi qu'un flacon 20, un ensemble-détecteur 24 et un moteur asynchrone 26 prévu pour déplacer l'ensemble-détecteur 24 le long du réservoir.

Le dispositif 4, permettant la mesure du volume de boue décantée, comprend un autre récipient 28 par exemple cylindrique, de forme allongée, qui est appelé par la suite "éprouvette" et qui a une capacité de l'ordre de trois litres par exemple, ainsi qu'un ensemble-détecteur 30 et un moteur asynchrone 32 prévu pour déplacer l'ensemble-détecteur 30 le long de l'éprouvette.

Cette éprouvette a un col 34 évasé, ce qui permet de faire couler doucement l'eau chargée de boue sur le col et donc de faciliter la décantation de cette boue dans l'eau clarifiée dont l'éprouvette est destinée à être remplie.

En outre, l'éprouvette, qui peut être en verre ou en Plexiglass, est fermée par un couvercle 36 par exemple en Plexiglass, qui est percé d'ouvertures permettant respectivement le passage d'un tube 38 destiné à la vidange de l'éprouvette, d'un tube 40 destiné au remplissage en eau clarifiée et en eau chargée de boue de ladite éprouvette, d'un tube 42 par lequel passe l'alimentation électrique d'une sonde à électrodes 44 fixée à l'extrémité inférieure de ce tube 42, et enfin de la tige 46 d'un vérin à double effet 48 dont chaque extrémité est pourvue d'un orifice permettant son alimentation en fluide de commande qui est par exemple de l'eau.

L'extrémité du tube 38, qui se trouve dans l'éprouvette, est située au voisinage du fond de cette éprouvette, tandis que l'extrémité du tube 40, qui se trouve également dans l'éprouvette, est située au-dessus du col de cette éprouvette.

Le vérin 48 est fixé au couvercle 36 de façon que sa tige soit déplaçable parallèlement à l'axe de l'éprouvette. Le tube 42 qui est parallèle à la tige du vérin et dont l'extrémité inférieure est rendue rigidement solidaire de l'extrémité inférieure de cette tige, par exemple au moyen d'une plaquette 49, est également déplaçable parallèlement à cet axe.

La course du vérin hydraulique 48 est prévue pour que, lorsque ce vérin est en position basse (ou plus exactement lorsque la tige de ce vérin est en position basse), l'extrémité inférieure de chacune des électrodes de la sonde 44 vienne au niveau correspondant à un litre et demi d'eau clarifiée dans l'éprouvette 28, et lorsque le vérin est en position haute (ou plus exactement lorsque la tige de ce vérin est en position haute), au niveau correspondant à deux litres et demi d'eau et de boue dans l'éprouvette 28.

L'ensemble détecteur 30 comprend une tablette 50 qui borde au moins une partie du pourtour de l'éprouvette 28 et qui est déplaçable le long de cette éprouvette. La tablette 50 porte une photodiode émettrice 52 orientée de façon à envoyer un faisceau lumineux à travers l'éprouvette 28, cette dernière et l'eau clarifiée étant transparentes à la lumière émise par la photodiode. La tablette 50 porte également, en regard de la photodiode 52, un photodétecteur tel qu'un phototransistor 54, destiné à recevoir la lumière émise par la photodiode 52 et ayant traversé l'éprouvette 28 lorsqu'elle n'en est pas empêchée par de la boue qui se trouverait dans cette éprouvette.

Le moteur 32 asynchrone, est fixé sur un support 56, placé au niveau de la partie supérieure de l'éprouvette 28. Ce moteur entraîne une vis sans fin 58 en rotation autour d'un axe parallèle à celui de l'éprouvette 28. La tablette 50 est couplée à la vis sans fin 58 de manière à monter ou à descendre le long de l'éprouvette 28 suivant le sens de rotation du moteur 32.

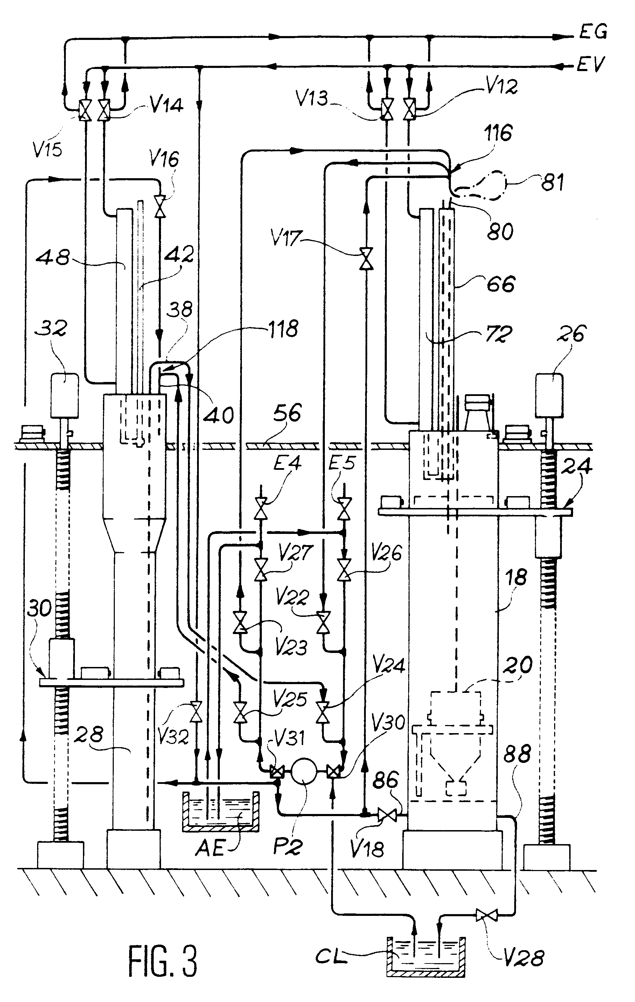

Le principe de la mesure du volume de boue décantée est le suivant : après avoir rempli (en utilisant les circuits hydrauliques représentés sur la figure 3) l'éprouvette d'un litre et demi d'eau clarifiée (ce qui est détecté par la sonde 44 lorsque le vérin 48 est en position basse), puis d'un litre d'eau chargée de boue (ce qui est détecté par la sonde 44 lorsque le vérin 48 est en position haute), on laisse l'ensemble décanter pendant une demi-heure. Au bout de ce temps, la tablette est déplacée à partir du bas de l'éprouvette, vers le haut de celle-ci grâce au moteur 32 (commandé par le système électronique de traitement) tandis que la photodiode émet un faisceau lumineux. Tant que celui-ci rencontre la boue, qui est opaque à ce faisceau lumineux il ne peut atteindre le phototransistor. Au moment où la tablette atteint le niveau de séparation de l'eau et de la boue décantée dans l'éprouvette ce faisceau lumineux peut traverser cette éprouvette et atteindre le phototransistor qui informe alors de ceci le système électronique de traitement. Le comptage du nombre de tours effectués par le moteur 32 permet alors, connaissant le pas de la vis sans fin 58, de déterminer la hauteur de boue décantée dans l'éprouvette, et connaissant la section de cette éprouvette, le volume de ladite boue décantée.

Pour déterminer le nombre de tours effectués par le moteur 32, on utilise un ensemble-détecteur 60-61 comprenant un photo-émetteur 60 fixé sur le support 56 (qui est traversé par l'arbre du moteur 32) et un photodétecteur 61 surmontant le photo-émetteur, ainsi qu'un doigt optiquement réflecteur 62 fixé sur l'arbre du moteur et prévu pour dévier le faisceau lumineux émis par le photo-émetteur 60 en direction du photodétecteur 61 à chaque passage devant l'ensemble détecteur 60-61, le photodétecteur 61 engendrant alors une impulsions électrique, le nombre d'impulsions électriques étant donc égal au nombre de tours effectués par le moteur 32.

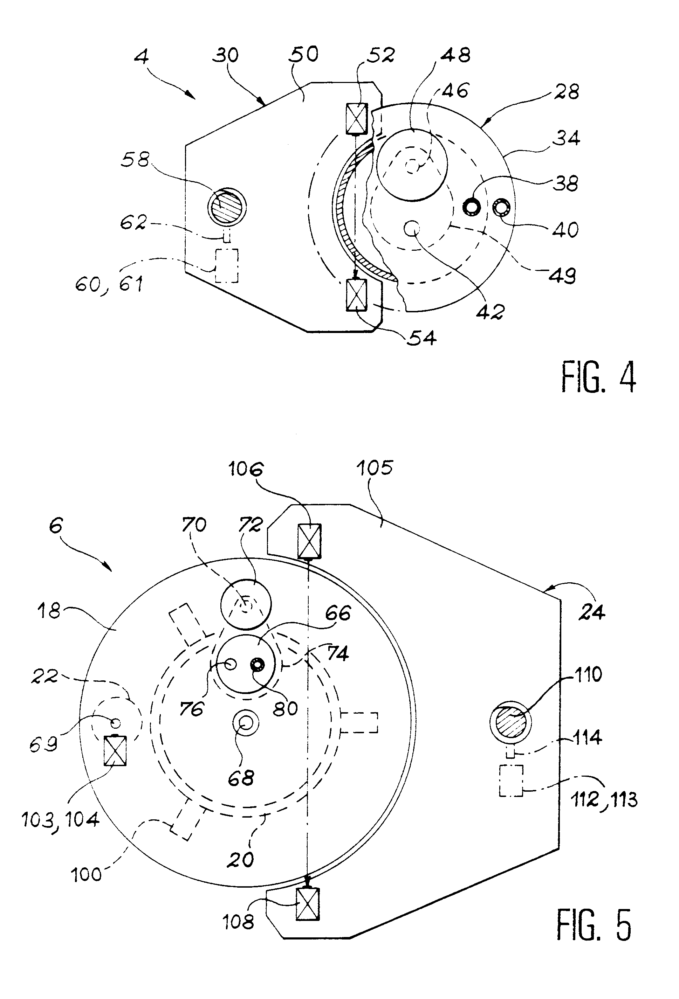

Bien entendu, la disposition relative de l'ensemble-détecteur 30 et du tube 38 est telle que le faisceau lumineux issu de la photodiode 52 ne soit pas occulté par le tube 38. Une disposition possible est représentée sur la figure 4 : la tablette 50 portant la photodiode 52 et le phototransistor 54 est placée d'un côté de l'éprouvette et de telle façon que le tube 38 et le faisceau lumineux émis par la photodiode 52 soient de part et d'autre d'un plan diamétral de l'éprouvette.

Revenant au dispositif 6 de mesure du poids apparent, le réservoir 18, qui peut être en verre ou en Plexiglass, est fermé par un couvercle 64 par exemple en Plexiglass, pourvu d'ouvertures permettant respectivement le passage d'un fourreau rigide 66, d'une tige 68 rendue rigidement solidaire du flacon 20, d'une tige 69 rendue rigidement solidaire d'un flotteur 22 comme on le verra plus en détail par la suite, et de la tige 70 d'un vérin à double effet 72. Ce vérin est fixé au couvercle 64 de manière que sa tige soit déplaçable parallèlement à l'axe du réservoir. En outre, ce vérin 72 possède à chacune de ses deux extrémités un orifice permettant l'alimentation du vérin en fluide de commande qui est par exemple de l'eau.

Le fourreau 66, qui est parallèle à la tige du vérin 72 et dont l'extrémité inférieure est rendue solidaire de l'extrémité inférieure de la tige du vérin hydraulique 72 au moyen d'un plaquette 74 par exemple, est également déplaçable parallèlement à cet axe.

A l'intérieur du fourreau 66 sont fixés un tube 76 par lequel passe l'alimentation électrique d'une sonde à électrodes 78 fixée à l'extrémité inférieure du tube 76 ainsi qu'un conduit 80 prévu pour l'alimentation en eau clarifiée et en eau chargée de boue du flacon et pour la vidange de ce flacon. L'extrémité supérieure du conduit 80 est raccordée à une voie d'un distributeur à quatre voies 116 fixe, au moyen d'un conduit souple 81 (figure 3) de longueur suffisante pour supporter les déplacements du fourreau 66.

Le tube 76 et le conduit 80 sont fixés à chaque extrémité du fourreau 66 au moyen d'une bague, par exemple en polychlorure de vinyle.

En l'absence d'utilisation du dispositif 6, le flacon 20 repose sur un support 82, au voisinage du fond du réservoir 18. Les divers remplissages et vidanges du flacon sont effectués quand ce flacon repose sur son support, le vérin 72 étant alors en position basse.

Les électrodes de la sonde 78 et l'extrémité inférieure du conduit 80 dépassent de l'extrémité inférieure du fourreau 66. La course du vérin 72 est prévue, pour que, lorsque ce vérin est en position basse (ou plus exactement lorsque la tige de ce vérin est en position basse), et lorsque le flacon 20 repose sur son support 82, l'extrémité inférieure de chaque électrode vienne au niveau du bord supérieur du flacon, de manière à pouvoir détecter la fin du remplissage de celui-ci au moyen d'eau clarifiée ou d'eau chargée de boue, et lorsque le vérin est en position haute (ou plus exactement lorsque la tige de ce vérin est en position haute), les électrodes soient à proximité du couvercle 64 du réservoir. L'extrémité inférieure du conduit 80 dépasse du fourreau 66 d'une longueur telle que lorsque le vérin est en position basse, cette extrémité inférieure du conduit 80 soit au voisinage du fond du flacon.

Le remplissage en eau clarifiée et la vidange du réservoir sont effectués par le fond de celui-ci. Pour éviter les phénomènes de bouillonnement lors du remplissage, une rainure annulaire 84 est réalisée dans le fond du réservoir. Des conduits 86 et 88 respectivement prévus pour le remplissage et la vidange du réservoir, débouchent dans cette cavité, cette dernière communiquant avec le reste du réservoir grâce à des orifices 90 de très faible diamètre (de l'ordre de 1 à 2 mm par exemple), qui traversent une plaque 89 reposant contre le fond du réservoir.

Le support 82 du flacon comprend une collerette 98 munie de pieds lui permettant de reposer sur la plaque 89. Le flacon 20 est muni d'ergots 100 lui permettant de reposer sur la collerette 98. De préférence, cette collerette est percée de trous (non repésentés) pour faciliter le passage de l'eau clarifiée lors du remplissage du réservoir.

Le flacon 20 est par exemple en polypropylène. En outre, de manière à permettre le "glissement" et l'évacuation de bulles d'air lors de l'immersion du flacon dans l'eau clarifiée que le réservoir est destiné à contenir, le flacon peut comporter un fond conique 92 prolongé supérieurement par une paroi cylindrique 94 dont le bord supérieur est légèrement plus haut du côté intérieur que du côté extérieur du flacon (l'inclinaison dudit bord étant par exemple de l'ordre de 20 à 30° par rapport à un plan perpendiculaire à l'axe du flacon), afin d'empêcher la sortie de liquide chargé de boue du flacon lorsque celui-ci en est rempli et immergé dans le liquide clarifié du récipient en cours de remplissage.

En plus de la tige 68, le flacon comprend un lest 96 fixé sous le flacon et contre celui-ci. La tige 68 est quant à elle fixée au fond du flacon et s'étend suivant l'axe de celui-ci.

La longueur de la tige 68 est choisie de façon que cette tige sorte du couvercle 64 du réservoir lorsque le flacon 20 repose sur le support 82.

L'ensemble mobile constitué par le flacon 20 muni des ergots 100, la tige 68 et le lest 96 est conçu de telle manière qu'à l'équilibre entre le poids de cet ensemble et la poussée d'Archimède dans le réservoir rempli d'eau clarifiée, le bord supérieur du flacon (rempli d'eau clarifiée ou d'eau chargée de boue) se stabilise sous le niveau de l'eau contenue dans ce réservoir, seule émergeant une partie de la tige 68.

En outre, dans ledit ensemble, la répartition des masses est prévue pour que le centre de poussée de cet ensemble placé dans le réservoir rempli d'eau clarifiée soit à la verticale et au-dessus du centre de gravité de l'ensemble. Pour ce faire, on choisit un lest de masse suffisamment importante tout en donnant audit ensemble une masse qui permette son "décollage". Il en résulte que la montée du flacon dans le réservoir se fait verticalement et n'a pas à être guidée. Il est donc possible de réaliser dans le couvercle 64 une ouverture permettant le passage de la tige 68, ouverture dont le diamètre est très supérieur à celui de cette tige 68. On évite ainsi les frottements de la tige 68 contre le couvercle 64 lorsque le flacon s'élève dans le réservoir. De plus, l'obtention d'une montée verticale du flacon fait que les éventuels frottements du flacon contre la paroi du réservoir ont lieu uniquement en les extrémités quasi-ponctuelles des ergots 100 dont est muni le flacon : avec trois ergots à 120° les uns des autres, au plus deux ergots frottent simultanément contre la paroi du réservoir lors de la montée du flacon.

Les frottements sont donc ainsi très limités. Par conséquent, la stabilisation du flacon (rempli d'eau clarifiée ou d'eau chargée de boue) a lieu, dans le réservoir, en une position où l'égalité poids-poussée d'Archimède a réellement lieu.

Le réservoir est rempli d'un volume d'eau clarifiée qui est le même pour toutes les mesures, ce volume étant suffisant pour que l'on puisse mesurer, avec l'appareil, le poids apparent de toutes sortes de boues.

La détection de la fin du remplissage du réservoir, c'est-à-dire de l'atteinte par l'eau, dans ce dernier, du niveau maximum prédéterminé, est réalisée au moyen du flotteur 22 qui est prévu pour flotter à la surface de l'eau clarifiée contenue dans le réservoir. Le flotteur 22 est fixé à l'extrémité inférieure d'une tige verticale 69 qui traverse librement une ouverture que comporte le couvercle 64. L'extrémité supérieure de la tige 69 comporte une butée 71 de taille suffisante pour empêcher la chute du flotteur 22 dans le réservoir lorsque ce dernier est vide.

Un ensemble-détecteur 103-104, qui comprend un photo-émetteur 103 surmonté d'un photodétecteur 104, est également fixé sur le couvercle 64 du réservoir. L'extrémité supérieure de la tige 69 et la butée 71 sont par exemple en acier inoxydable poli pour être capables de réfléchir la lumière émise par le photo-émetteur 103. La tige 69 a une longueur telle que le photodétecteur 104 capte la lumière engendrée par le photo-émetteur 103 et réfléchie par l'extrémité supérieure de la tige 69, si et seulement si le niveau maximum d'eau clarifiée dans le réservoir est atteint : lorsque l'eau atteint, dans le réservoir, un certain niveau proche du niveau maximum, le flotteur se met à surnager à la surface de l'eau et monte pendant que le réservoir continue à se remplir jusqu'à l'atteinte du niveau maximum pour lequel la partie supérieure de la tige 69 réfléchit la lumière issue du photo-émetteur 103. Le photodétecteur 104 engendre alors un signal. Le système électronique de traitement, alors informé par ce signal de l'atteinte du niveau maximum, commande l'arrêt du remplissage en eau clarifiée du réservoir.

L'ensemble-détecteur 24 qui est prévu pour repérer chaque position d'équilibre du flacon 20 dans le réservoir, est conçu comme l'ensemble-détecteur 30 et comprend ainsi une tablette 105 qui borde au moins une partie du pourtour du réservoir 18 et qui est déplaçable le long de celui-ci. La tablette 105 porte une photodiode émettrice 106 orientée de façon à envoyer un faisceau lumineux à travers le réservoir 18, ce dernier étant transparent à la lumière émise par la photodiode 106 alors que le flacon, ou tout au moins sa partie supérieure, est opaque vis-à-vis de cette lumière. La tablette 105 porte également, en regard de la photodiode 106, un photodétecteur tel qu'un phototransistor 108 qui est destiné à recevoir la lumière émise par la photodiode 106 et ayant traversé le réservoir 18 tant qu'elle n'en est pas empêchée par le flacon 20.

Les déplacements de la tablette 105 ont lieu sensiblement à partir du haut du réservoir par exemple et sont commandés par le système électronique de traitement.

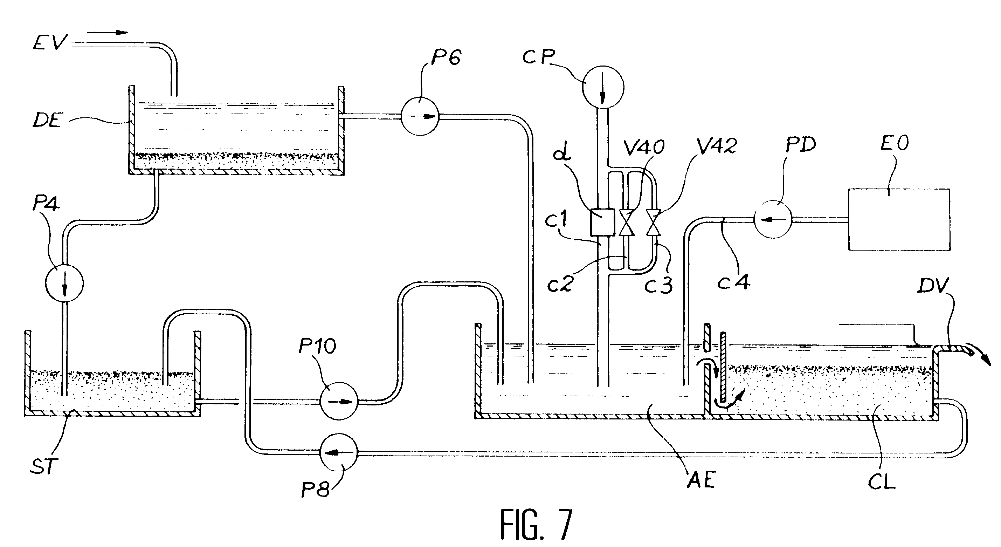

Sur les figures 2 et 3, tous les composants du dispositif de mesure du poids apparent sont représentés dans un même plan mais, bien entendu, la disposition relative de la tige 68, du flotteur 22, de l'ensemble-détecteur 24 et du vérin 72 sont prévues pour que le faisceau lumineux issu de la photodiode 106 ne puisse être occulté que par le flacon dans ses deux positions d'équilibre. Une disposition possible est représentée sur la figure 5 : la tablette 105 portant la photodiode 106 et le phototransistor 108 est placée d'un côté du réservoir et de telle façon que le flotteur 22 et le faisceau lumineux émis par la photodiode 106 soient de part et d'autre d'un plan diamétral du réservoir, ce plan diamétral contenant la tige 68, et le vérin 72 ainsi que le tube 80 sont situés dans l'espace délimité par le plan contenant les tiges 68 et 69 et par le plan parallèle à la tige 68 et contenant le faisceau lumineux en question.

De plus, le vérin 72 et le tube 80 sont bien entendu placés de telle façon que ce tube 80 ne puisse gêner le mouvement ascendant du flacon lorsque ce dernier est en train d'atteindre sa position d'équilibre supérieure dans le réservoir (cette position correspondant au flacon rempli d'eau clarifiée).

Lorsque la lumière issue de la photodiode 106 est interceptée par le bord supérieur du flacon en équilibre dans l'eau clarifiée contenue dans le réservoir, le phototransistor 108 ne reçoit plus cette lumière et en informe le système électronique de traitement, d'où deux informations de position qui correspondent respectivement au flacon rempli d'eau clarifiée et au flacon rempli d'eau chargée de boue.

Le moteur 26, de type asynchrone, est fixé au niveau du couvercle 64 du réservoir, sur un support, l'ensemble éprouvette-réservoir pouvant être conçu de façon que ce support soit le support 56 du moteur 32. Le moteur 26 entraîne en rotation une vis sans fin 110 autour d'un axe parallèle à l'axe du réservoir et cette vis sans fin commande la montée ou la descente de la tablette 105 le long du réservoir suivant le sens de rotation du moteur 26.

Connaissant le pas de la vis sans fin 110 et le nombre de tours, le système électronique de traitement peut déterminer et mémoriser chaque position d'immersion du flacon dans le réservoir.

Le nombre de tours effectués par le moteur 26 est déterminé au moyen d'un ensemble-détecteur 112-113 fixé sur le support de ce moteur 26. L'arbre de ce dernier est muni d'un doigt 114 situé au niveau de l'ensemble-détecteur 112-113. Ce dernier comprend un photo-émetteur 112 surmonté d'un photodétecteur 113 prévu pour émettre une impulsion électrique à chaque passage du doigt 114 devant l'ensemble-détecteur 112-113, le photodétecteur 113 recevant alors le faisceau lumineux émis par le photo-émetteur 112 et réfléchi par le doigt 114 en direction du photodétecteur 113. Les impulsions issues de ce photodétecteur et correspondant aux tours effectués par le moteur 26 sont alors comptées par le système électronique de traitement qui est ainsi informé du nombre de tours du moteur 26.

Le principe de la mesure du poids apparent est le suivant : la montée d'eau dans le réservoir mouille une longueur croissante de la tige 68. La poussée d'Archimède sur l'ensemble flacon (rempli)-tige 68-lest -ergots s'accroît en proportion. Dès qu'elle devient supérieure au poids de l'ensemble, celui-ci décolle du support 82 et suit la montée de l'eau jusqu'à ce que le niveau maximum prédéterminé soit atteint dans le réservoir. Après arrêt de l'arrivée d'eau et stabilisation du flacon, on mesure la profondeur d'immersion de celui-ci comme on l'a indiqué plus haut. Le poids apparent est proportionnel à la différence d'immersion h, dans le réservoir rempli d'eau clarifiée, du flacon 20 respectivement rempli d'eau clarifiée et d'eau chargée de boue. Plus précisément, le poids apparent P est relié à la différence d'immersion h par la formule suivante :

$$P = h.S.v^{-1}.d.g \quad (1)$$

dans laquelle S, v, d et g représentent respectivement la section de la tige 68, le volume utile du flacon (contenance du flacon qui est par exemple choisie égale à 0,5 litre), la masse volumique de l'eau clarifiée et l'accélération de la pesanteur.

En fait, le poids apparent (pour un litre d'eau chargée de boue) est exprimé en grammes et l'on ne tient donc pas compte de la quantité g de la formule ci-dessus.

La sensibilité de l'appareil est inversement proportionnelle à la section S de la tige 68. La plage de mesure est quant à elle proportionnelle à cette section S. Le choix de la section de la tige 68 résulte donc d'un compromis entre deux contraintes contradictoires, à savoir une forte sensibilité (de l'ordre de 0,05 gramme par litre par exemple) et un domaine de mesure étendu autour d'une valeur moyenne faible, ce domaine allant de 0,5 grammes par litre à 4 grammes par litre par exemple.

Pour parvenir à un compromis, il faut pouvoir appliquer la formule (1) mentionnée plus haut et donc avoir un vrai équilibre hydrostatique, ce qui est le cas dans la présente invention.

L'intérêt d'utiliser le polypropylène pour réaliser le flacon réside dans le fait que ce matériau a une densité inférieure à 1, ce qui permet de réaliser un flacon à une seule paroi, qui décolle et se stabilise sous l'eau, alors que pour obtenir ce résultat avec un flacon dont le matériau constitutif est de densité supérieure à 1, il faut réaliser un flacon à double paroi. En outre, le poids du flacon en polypropylène est constant dans les deux phases de mesure du poids apparent (flacon rempli d'eau clarifiée et flacon rempli d'eau chargée de boue).

La mesure des quantités P et V nécessite le remplissage de l'éprouvette en eau clarifiée et en eau chargée de boue et la vidange de cette éprouvette, ainsi que le remplissage du réservoir en eau clarifiée et la vidange dudit réservoir, et également le remplissage du flacon en eau clarifiée et en eau chargée de boue ainsi que la vidange dudit flacon. Ces divers remplissages et vidanges sont réalisés à l'aide d'un seul ensemble hydraulique qui combine deux circuits hydrauliques respectivement appelés "circuit d'eau clarifiée" et "circuit des boues" (figure 3). La source d'eau clarifiée est constituée par le clarificateur CL de la station d'épuration et la source d'eau chargée de boue est constituée par l'aérateur AE de cette station d'épuration.

Le circuit des boues est le suivant :

L'eau chargée de boue est pompée dans l'aérateur AE par une pompe référencée P2. Une canalisation part de l'aérateur et aboutit à une voie d'une électrovanne à deux voies V26. Trois dérivations sont reliées en parallèle à la seconde voie de cette électrovanne :

– une première dérivation aboutissant à une voie d'une électrovanne à deux voies V22 dont la seconde voie aboutit à une première voie d'un distributeur à quatre voies 116, dont la deuxième voie est reliée au conduit 80 par l'intermédiaire d'un conduit souple 81,

– une deuxième dérivation aboutissant à une voie d'une électrovanne à deux voies V24 dont la seconde voie est reliée au conduit 38, et

– une troisième dérivation reliée a une première voie d'une électrovanne à trois voies V30 dont une deuxième voie aboutit à l'entrée de la pompe.

La sortie de la pompe P2 est reliée à une première voie d'une électrovanne à trois voies V31. Une deuxième voie de celle-ci est reliée à une voie d'une électrovanne à deux voies V27 dont la seconde voie est reliée à l'aérateur.

Sur la canalisation reliant la pompe P2 à l'électrovanne V27, et à partir de la pompe P2, on trouve successivement :

– une première dérivation aboutissant à une voie d'une électrovanne à deux voies V25 dont la seconde voie est reliée à une première voie d'un distributeur à trois voies 118, dont la deuxième voie est reliée au conduit 40, et

– une seconde dérivation aboutissant à une voie d'une électrovanne à deux voies V23 dont la seconde voie est reliée à la troisième voie du distributeur 116.

Pour le circuit des boues, on a alors les divers états suivants et pour chaque état, l'ouverture ou la fermeture des électrovannes est déterminée en conséquence :

– attente : de AE vers V26 vers V30 vers P2 vers V31 vers V27 vers AE

– remplissage du flacon en eau chargée de boue : AE vers V26 vers V30 vers P2 vers V31 vers V23 vers distributeur 116

– remplissage de l'éprouvette en eau chargée de boue : AE vers V26 vers V30 vers P2 vers V31 vers V25 vers distributeur 118

– vidange de l'éprouvette : du conduit 38 vers V24 vers V30 vers P2 vers V31 vers V27 vers AE

– vidange du flacon : du conduit 80 vers le distributeur 116 vers V22 vers 30 vers P2 vers V31 vers V27 vers AE.

On a également prévu des évents par électrovannes E4 et E5 respectivement montés en dérivation sur les canalisations reliant l'électrovanne V26 et l'électrovanne V27 à l'aérateur.

Le circuit d'eau clarifiée comprend l'électrovanne V30 dont la troisième voie est reliée par une canalisation au clarificateur, la pompe P2 et l'électrovanne V31. Quatre dérivations sont reliées en parallèle à la troisième voie de l'électrovanne V31 :

– une première dérivation aboutissant à une voie d'une électrovanne à deux voies V16 dont la seconde voie est reliée à la troisième voie du distributeur 118,

– une deuxième dérivation aboutissant à une voie d'une électrovanne à deux voies V17 dont la seconde voie est reliée à la quatrième voie du distributeur 116,

– une troisième voie aboutissant à une voie d'une électrovanne à deux voies V18 dont la seconde voie est reliée au conduit 86, et

– une quatrième voie aboutissant à une voie d'une électrovanne à deux voies V32 dont la seconde voie aboutit, comme on le verra par la suite, à un circuit "d'eau de ville" (eau propre sous pression fournie par un réseau de distribution d'eau).

Ainsi, l'eau clarifiée peut-elle être aspirée, par la pompe P2, dans le clarificateur CL à travers l'électrovanne V30, et distribuée par l'électrovanne V31, respectivement et suivant besoin :

– dans le flacon 20 par V17,

– dans l'éprouvette 28 par V16, et

– dans le réservoir 18 par V18.

La vidange de l'eau clarifiée susceptible d'être contenue dans le réservoir 18 se fait par gravité à partir du conduit 88, en direction du clarificateur, à travers une électrovanne à deux voies V28.

Comme on l'a déjà indiqué, la vidange de l'eau clarifiée contenue dans le flacon (respectivement l'éprouvette) se fait par l'intermédiaire du circuit des boues, à l'aide de la pompe P2 et de l'électrovanne V22 (respectivement V24).

Il existe un troisième circuit permettant l'utilisation de l'eau de ville par exemple pour procéder après une mesure, au rinçage des circuits et de l'éprouvette. Le remplissage de cette dernière en eau de ville s'effectue par l'intermédiaire de l'électrovanne à deux voies V32 dont la seconde voie est reliée à la canalisation d'arrivée d'eau de ville EV.

L'eau de ville est également fournie aux deux vérins par l'intermédiaire d'électrovannes à trois voies V12, V13, V14 et V15, afin de permettre le fonctionnement de ces vérins.

Plus précisément, l'eau de ville est envoyée en parallèle aux entrées respectives des électrovannes V12, V13, V14 et V15. L'électrovanne à trois voies V12 servant à la mise en position basse du vérin 72, a l'une de ses deux sorties reliée à l'orifice de ce vérin 72, correspondant à la mise en position basse dudit vérin. L'électrovanne à trois voies V13, servant à la mise en position haute du vérin 72, a l'une de ses deux sorties reliée à l'orifice de ce vérin 72, correspondant à la mise en position haute dudit vérin.

L'électrovanne à trois voies V14, servant à la mise en position basse du vérin 48 associé à l'éprouvette, a l'une de ses deux sorties reliée à l'orifice de ce vérin 48, correspondant à la mise en position basse dudit vérin 48. L'électrovanne V15, servant à la mise en position haute du vérin 48, a l'une de ses deux sorties reliée à l'orifice du vérin 48 correspondant à la mise en position haute de ce vérin 48.

Les secondes voies de sortie des électrovannes à trois voies V12, V13, V14 et V15 sont reliées à une canalisation aboutissant à un égout EG.

On notera que les dispositifs 4 et 6 reposent sur un bâti commun 120, sur lequel reposent également les paliers respectifs 122 et 124 des vis sans fin 58 et 110.

L'interface de puissance 10 (figure 1), dont le contenu n'est pas représenté, comprend un ensemble de relais destinés à la commande des électrovannes et des moteurs 26 et 32, des circuits électroniques respectivement associés aux sondes à électrodes 44 et 78, des circuits à relais permettant de relier respectivement les ensembles-détecteurs 52-54, 103-104 et 106-108 à l'ensemble informatique 8 ainsi que deux circuits à relais respectivement associés aux ensembles-détecteurs 60-61 et 112-113, et enfin différentes alimentations fournissant les tensions et les courants nécessaires au fonctionnement de l'électronique et des éléments électriques de l'armoire contenant les dispositifs 4 et 6.

L'ensemble informatique 8 (figure 1) comprend un ordinateur associé à une carte d'entrées-sorties (non représentés). Les signaux (0 ou 5V) issus de la carte d'entrées-sorties ne peuvent commander directement les électrovannes ou les moteurs 26 et 32. Cette commande est donc réalisée par l'intermédiaire des relais mentionnés plus haut (relais de puissance) qui sont capables de commuter des courants importants et des tensions élevées (voir document I). Chacun des moteurs 26 et 32 est commandé par deux relais correspondant respectivement aux deux sens de rotation du moteur.

En outre, contrairement aux autres électrovannes du système de mesure représenté sur la figure 3, les électrovannes E4 et E5, qui permettent de "vider" les canalisations sur lesquelles elles sont montées, lors de l'arrêt du système de mesure, ne sont pas associées à des relais de puissance mais sont alimentées (fermées) dés que le système de mesure est sous tension et ouvertes dès que le système de mesure est hors tension (n'est pas utilisé).

La commande des électrovannes V16, V17, V18, V22, V23, V24, V25, V26, V27, V28, V30, V31 et V32 ne pose pas de problème particulier.

Les électrovannes à trois voies V12, V13, V14 et V15 sont commandées de façon appropriée (et classique) pour le bon fonctionnement des vérins auxquels elles sont associées : pour un vérin donné en fonctionnement, l'une des électrovannes lui étant associée doit permettre l'entrée d'eau de ville dans le vérin tandis que l'autre électrovanne associée doit permettre l'évacuation d'eau du vérin.

On notera que l'électrovanne V27 doit être fermée par l'ouverture de l'électrovanne V23 ou de l'électrovanne V25 et lorsque les électrovannes V23 et V25 sont fermées, l'électrovannes V27 doit être ouverte. Ces conditions sont réalisées à partir d'une porte logique OU.

De même, lorsque l'électrovanne V26 est ouverte, les deux électrovannes V22 et V24 doivent être fermées et l'ouverture de l'une ou l'autre de ces électrovannes V22 et V24 doit entraîner la fermeture de l'électrovanne V26. Ces conditions sont réalisées à partir d'une porte logique OU.

Le photodétecteur 54 commande un circuit à relais dont la sortie est reliée à l'ensemble informatique et qui est prévu pour informer ce dernier de l'atteinte, par la tablette 50, du niveau de séparation de l'eau et de la boue décantée dans l'éprouvette.

Le photodétecteur 108 commande également un circuit à relais dont la sortie est reliée à l'ensemble informatique et qui est prévu pour informer ce dernier de l'atteinte, par la tablette 105, de la position du flacon 20 (ou plus exactement du bord supérieur de ce dernier).

De même, le photodétecteur 104 informe, par l'intermédiaire d'un circuit à relais, l'ensemble informatique 8 de l'atteinte du niveau maximum d'eau clarifiée dans le réservoir.

Les impulsions engendrées par chaque photodétecteur 61 ou 113 sont fournies, par l'intermédiaire d'un circuit à relais, au système électronique de traitement dans lequel elles sont comptées.

Bien entendu, l'ordinateur que comprend l'ensemble informatique 8 est programmé pour commander l'allumage de chaque émetteur de lumière du système (photodiodes 52, 106, photo-émetteurs 60, 103 et 112) au moment où l'on a besoin de cet émetteur de lumière et pour commander l'extinction de ce dernier lorsque l'opération pour laquelle il était nécessaire est terminée. Par exemple, l'ordinateur commande l'allumage du photo-émetteur 103 lorsque l'opération de remplissage du réservoir jusqu'audit niveau prédéterminé commence, et commande l'extinction du photo-émetteur 103 lorsqu'il est informé, par le photodétecteur 104, de l'atteinte de ce niveau. Les divers allumages et extinctions sont effectués par l'intermédiaire de l'interface de puissance 10 qui comporte les alimentations électriques et les commutateurs nécessaires à cet effet.

Les sondes de détection à électrodes 44 et 78 peuvent être réalisées comme la sonde référencée 66 dans le document I. Ainsi, les électrodes de chacune des sondes 44 et 78 peuvent être reliées à l'ensemble informatique par l'intermédiaire d'un circuit du genre de celui qui est représenté sur la figure 13 du document I.

Pour éviter que la pompe P2 ne tourne à vide, le temps de vidange de l'éprouvette est programmé, aucun capteur de vidange de cette éprouvette n'étant donc nécessaire. Les positions "haute" et "basse" de chacune des tablettes 50 et 105 sont détectées par quatre microcontacts (deux pour les deux positions de chaque tablette) non représentés, chacun d'eux étant apte à fournir une indication 0 ou 5V directement à l'ensemble informatique.

De même, les positions hautes et basses des tiges des vérins 48 et 72 sont détectées par quatre microcontacts 48a, 48b (positions haute et basse relatives au vérin 48) et 72a, 72b position haute et basse relatives au vérin 72).

Le programme de gestion -ou programme de fonctionnement- du système de mesure automatique de l'indice de PONSAR, objet de l'invention, comprend tout d'abord une étape d'initialisation des entrées-sorties de l'ensemble informatique, suivie d'un contrôle de la "position de départ" du dispositif de mesure du volume et du dispositif de mesure du poids apparent :

– on vérifie au moyen de la sonde associée au vérin correspondant à l'éprouvette qu'il n'y a pas d'eau au niveau où se trouve cette sonde, sinon on vide l'éprouvette,

– on vérifie que la tablette correspondant au réservoir est en position haute sinon on la met dans cette position,

– on vérifie que la tablette correspondant à l'éprouvette est en position basse sinon on la met dans cette position,

– on vérifie que le vérin correspondant au réservoir est en position haute sinon on le met dans cette position,

– on vérifie que le vérin correspondant à l'éprouvette est en position basse sinon on le met dans cette position, et

– on vidange le réservoir (entre deux utilisations du système de mesure objet de l'invention, il est préférable de remplir suffisamment le réservoir pour que le flacon qui se trouve au fond de celui-ci soit submergé).

Après quoi, les phases successives suivantes ("processus de mesure") que comprend le programme de gestion du système de mesure de l'indice de PONSAR sont effectuées :

1 - descente du vérin du réservoir

2 - vidange du flacon

3 - temporisation (temps d'attente) pour le nettoyage du flacon par de l'eau clarifiée

4 - remplissage du flacon en eau clarifiée

5 - vidange du flacon

6 - temporisation pour le remplissage du flacon en eau clarifiée

7 - remplissage du flacon en eau clarifiée

8 - montée du vérin du réservoir

9 - remplissage du réservoir en eau clarifiée

10 - remplissage de l'éprouvette en eau clarifiée (1,5l)

11 - montée du vérin de l'éprouvette

12 - temporisation pour le remplissage de l'éprouvette en eau chargée de boue

13 - remplissage de l'éprouvette en eau chargée de boue (1l) et déclenchement d'une temporisation de 30 minutes

14 - descente de la tablette du réservoir, lecture de la position du flacon et affichage du résultat

15 - montée de la tablette du réservoir

16 - vidange du réservoir

17 - descente du vérin du réservoir

18 - vidange du flacon

19 - nettoyage du flacon par de l'eau chargée de boue

20 - temporisation pour le remplissage du flacon en eau chargée de boue

21 - remplissage du flacon en eau chargée de boue

22 - vidange du flacon

23 - temporisation pour le remplissage du flacon en eau chargé de boue

24 - remplissage du flacon eau chargée de boue

25 - montée de vérin du réservoir

26 - temporisation pour le remplissage du réservoir en eau clarifiée

27 - remplissage du réservoir en eau clarifiée jusqu'au bord supérieur du flacon

28 - attente pendant un temps déterminé (choisi égal à 3 ou 4 minutes) jusqu'à la fin de la décantation de la boue du flacon

29 - temporisation puis reprise du remplissage du réservoir en eau clarifiée

30 - temporisation pour la stabilisation du flacon

31 - descente de la tablette du réservoir, lecture de la position du flacon et affichage du résultat

32 - montée de la tablette du réservoir

33 - vidange du réservoir

34 - descente du vérin du réservoir

35 - vidange du flacon

36 - calcul du poids apparent de la boue et affichage du résultat

37 - temporisation pour le nettoyage du flacon en eau clarifiée

38 - remplissage du flacon en eau clarifiée

39 - vidange du flacon

40 - temporisation pour le remplissage du flacon en eau clarifiée

41 - remplissage du flacon en eau clarifiée

42 - montée du vérin du réservoir

43 - submersion du flacon par de l'eau clarifiée

44 - attente de la fin de la décantation de la boue dans l'éprouvette

45 - montée de la tablette de l'éprouvette et lecture du niveau de séparation boue-eau clarifiée dans cette éprouvette

46 - descente de la tablette de l'éprouvette jusqu'en position basse

47 - calcul du volume de décantation, affichage de celui-ci, calcul de l'indice de PONSAR et affichage de celui-ci

48 - vidange de l'éprouvette

49 - remplissage de l'éprouvette en eau de ville pour nettoyage de cette éprouvette puis vidange de l'éprouvette

50 - fin du programme

Comme on l'a indiqué dans le document I, un sous-programme permet de chronométrer les temps d'attente. Chacun des temps d'attente des étapes 3, 6, 12, 20, 23, 26, 29, 30, 37 et 40 ci-dessus est par exemple de l'ordre de 1 minute et 15 secondes.

La fin de l'étape 27 est également détectée par "chronométrage" au moyen de ce sous-programme qui permet aussi de chronométrer les temps de vidange du flacon, du réservoir et de l'éprouvette.

Pendant les temporisations pour le remplissage du flacon (ou du réservoir) en eau clarifiée, cette dernière circule simplement du clarificateur CL vers l'aérateur AE par l'intermédiaire de la pompe P2, sans pénétrer dans le flacon (ou le réservoir), l'état des vannes concernées étant prévu à cet effet. De même, pendant les temporisations pour le remplissage du flacon (ou de l'éprouvette) en eau chargée de boue, cette dernière circule simplement de l'aérateur AE vers ce même aérateur par l'intermédiaire de la pompe P2, sans pénétrer dans le flacon (ou l'éprouvette), l'état des vannes concernées étant prévu à cet effet.

Les temporisations relatives au remplissage du flacon (ou du réservoir) par de l'eau clarifiée sont prévues pour permettre le rinçage, par cette eau clarifiée, des canalisations concernées afin qu'il ne subsiste pas de boue dans celles-ci, sans quoi cette boue irait dans le flacon (ou dans le réservoir), ce qui fausserait les mesures. De même, les temporisations relatives au remplissage du flacon (ou de l'éprouvette) en eau chargée de boue sont prévues pour faire circuler pendant un temps suffisant de l'eau chargée de boue dans les canalisations concernées afin qu'il ne subsiste pas d'eau clarifiée dans celles-ci, sans quoi cette eau clarifiée irait dans le flacon (ou dans l'éprouvette), ce qui fausserait également les mesures par dilution de la boue.

Par ailleurs, après avoir déterminé le nombre N de tours effectués par le moteur associé à l'éprouvette, l'ordinateur calcule le volume de boue décantée V par la formule suivante :

$$V = (p.s.N) + V0$$

dans laquelle p et s représentent respectivement le pas de la vis sans fin associée à l'éprouvette et la section droite de l'éprouvette (entre le fond et le col 34 de cette éprouvette). La quantité V0 est un volume initial dû au fait que la tablette associée à l'éprouvette ne part pas exactement d'une hauteur nulle. Cette quantité V0 peut être déterminée lors de l'étalonnage du système automatique de mesure.

Le système de mesure automatique que l'on vient de décrire peut être utilisé pour la conduite automatique de la station d'épuration. On choisit alors un ensemble informatique 8 approprié à cette conduite automatique et le programme complet de gestion de la station - incluant alors le programme de fonctionnement du système de mesure automatique - est mémorisé sur une disquette qui est lue grâce au lecteur 12.

La station comprend en plus de l'aérateur AE et du clarificateur CL, au moins un décanteur DE et au moins un stabilisateur ST (figure 7).

Les eaux usées EU à traiter dans la station arrivent dans le décanteur et s'y séparent en une épaisseur de liquide boueux et dense, qui est envoyé au stabilisateur par l'intermédiaire d'une pompe P4, et une épaisseur de liquide moins dense qui est envoyé à l'aérateur par l'intermédiaire d'une pompe P6 puis, après agitation et aération dans ce dernier, au clarificateur. L'eau clarifiée produite dans ce clarificateur en est ensuite évacuée par un déversoir DV en direction d'une rivière par exemple.

La pompe P6 est commandée par l'ordinateur de l'ensemble informatique 8 et fonctionne normalement en permanence mais, dans certains cas, l'ordinateur peut en commander l'arrêt comme on le verra par la suite.

L'aérateur AE et le clarificateur Cl sont juxtaposés et séparés par une double paroi ouverte à sa partie supérieure du coté de l'aérateur et à sa partie inférieure du coté du clarificateur, de sorte que le liquide moins dense passe en permanence de l'aérateur au clarificateur CL. L'aérateur est muni de moyens d'aération qui sont prévus pour envoyer un courant d'air dans le liquide contenu dans l'aérateur.

Ce courant d'air provoque à la fois l'aération et l'agitation de ce liquide. Les moyens d'aération comprennent un compresseur CP qui envoie en permanence de l'air dans l'aérateur par l'intermédiaire d'une canalisation c1 munie d'un diaphragme d.

Afin de pouvoir augmenter l'aération, le compresseur est muni de moyens permettant l'augmentation du débit de celui-ci. Ces moyens peuvent comprendre une pluralité de canalisations montées en dérivation sur la canalisation c1 et munies d'électrovannes : on utilise par exemple une canalisation c2 sur laquelle est montée une électrovanne V40 et dont les deux extrémités communiquent avec la canalisation c1 en deux points de celle-ci situés de part et d'autre du diaphragme d et une autre canalisation c3 qui autorise un moins gros débit d'air que c2 et sur laquelle est montée une électrovanne V42. Les deux extrémités de la canalisation c3 communiquent avec la canalisation c2 en deux points de celle-ci situés de part et d'autre de l'électrovanne V40. Les électrovannes V40 et V42 sont commandées par l'ordinateur. Elles sont normalement fermées. L'ouverture de V40 seule permet d'augmenter l'aération du liquide contenu dans l'aérateur et l'ouverture de V40 et de V42 permet d'augmenter encore plus cette aération.

En vue de pouvoir oxygéner le liquide contenu dans l'aérateur, ce dernier est muni d'une réserve d'eau oxgénée EO. Cette eau oxygénée peut être envoyée dans l'aérateur par l'intermédiaire d'une canalisation c4 sur laquelle est montée une pompe doseuse PD. Cette dernière est commandée par l'ordinateur.

On peut être amené à effectuer des transferts de boue du clarificateur au stabilisateur par l'intermédiaire d'une pompe P8. Cette dernière est commandée par l'ordinateur et ne fonctionne que pour permettre les transferts de boue en question. De même, on peut être amené à effectuer des transferts de boue du stabilisateur à l'aérateur par l'intermédiaire d'une pompe P10. Cette dernière est commandée par l'ordinateur et ne fonctionne que pour permettre ces transferts de boue du stabilisateur à l'aérateur.

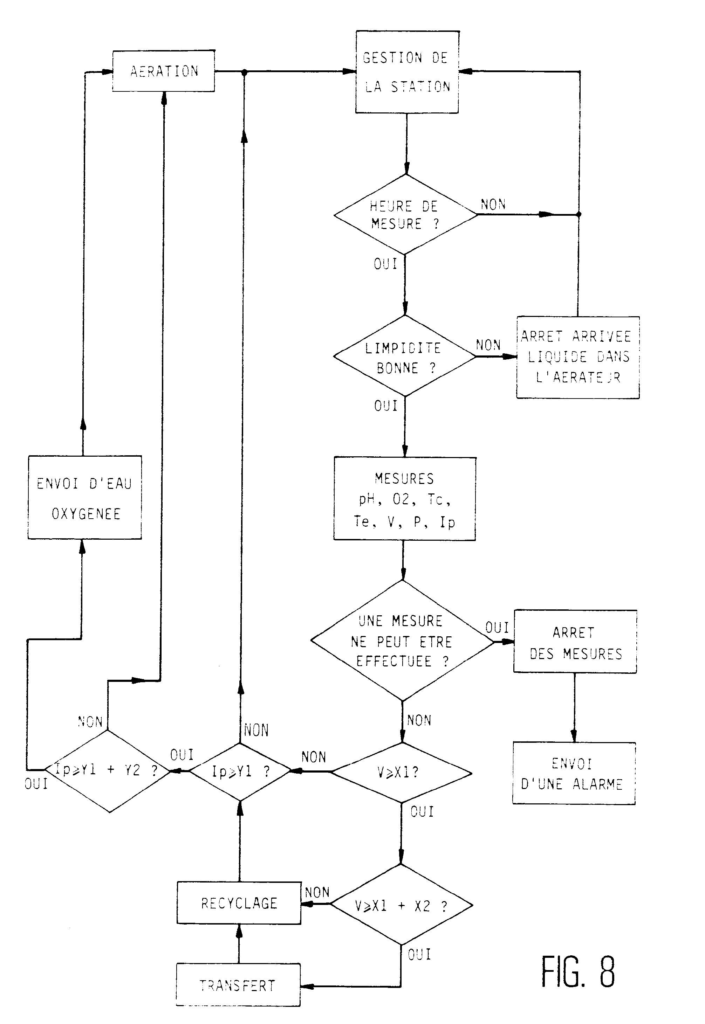

La gestion de la station est par exemple effectuée de la façon suivante (figure 8) : l'ordinateur de l'ensemble informatique 8 examine s'il est l'heure de mesurer l'indice de PONSAR (à cet effet, les différentes heures de mesure sont mémorisées et le programme de gestion de la station scrute à intervalles réguliers une horloge interne dont est muni l'ordinateur afin de savoir si l'heure indiquée par cette horloge est une heure de mesure). Si ce n'est pas l'heure, on retourne au début du programme de gestion de la station en attendant l'heure de la prochaine mesure. Si au contraire il est l'heure, l'ordinateur examine d'une manière indiquée par la suite si la limpidité de l'eau clarifiée est bonne. Si elle n'est pas bonne, l'ordinateur commande l'arrêt de l'arrivée de liquide dans l'aérateur en provenance du décanteur (en commandant l'arrêt de la pompe P6) de manière à faire baisser le niveau de boue dans le clarificateur puis on retourne au début du programme de gestion de la station en attendant l'heure de la prochaine mesure, heure à laquelle l'ordinateur commandera la remise en marche de la pompe P6.

Si au contraire la limpidité est bonne, l'ordinateur mesure, grâce à des capteurs appropriés non représentés, le pH du liquide contenu dans l'aérateur, la quantité d'oxygène $O_2$ dissout dans ce liquide, la température $T_c$ de l'eau du clarificateur et la température extérieure $T_e$ et mesure aussi, de la façon indiquée plus haut, le volume V et le poids apparent P ainsi que l'indice de PONSAR que l'on peut noter $I_p$.

Si l'une de ces mesures ne peut être effectuée du fait que, par exemple, des canalisations sont bouchées, les mesures sont arrêtées et une alarme est déclenchée afin d'alerter les utilisateurs.

Si au contraire toutes les mesures ont pu être effectuées, l'ordinateur examine si V est supérieur ou égal à une valeur X1 fixée par les utilisateurs. Si ce n'est pas le cas, l'ordinateur examine si $I_p$ est supérieur ou égal à une valeur Y1 fixée par les utilisateurs. Si $I_p$ est inférieur à Y1, on retourne au début du programme de gestion de la station pour attendre la prochaine heure de mesure.

Si au contraire $I_p$ est supérieur ou égal à Y1, l'ordinateur examine si $I_p$ est en outre supérieur ou égal à Y1+Y2, Y2 étant également fixé par les utilisateurs. Si ce n'est pas le cas, l'ordinateur commande l'augmentation de l'aération dans l'aérateur afin de rendre $I_p$ inférieur à Y1 puis l'on retourne au début du programme de gestion de la station pour attendre l'heure de la prochaine mesure.

Pour commander l'augmentation de l'aération, l'ordinateur commande :
- soit l'ouverture de V42 seule si $I_p$ est supérieur ou égal à Y1 mais inférieur à Y3, Y3 étant une valeur fixée par les utilisateurs et comprise entre Y1 et Y1+Y2,
- soit l'ouverture de V40 seule si $I_p$ est supérieur ou égal à Y3 mais inférieur à Y4, Y4 étant une valeur fixée par les utilisateurs et comprise entre Y3 et Y1+Y2,
- soit l'ouverture de V40 et de V42 si $I_p$ est supérieur ou égal à Y4 mais inférieur à Y1+Y2,
étant entendu qu'à l'heure de la prochaine mesure l'ordinateur commancera par commander la fermeture de l'électrovanne ainsi ouverte (ou des électrovannes ainsi ouvertes) avant d'exécuter la suite du programme (contrôle de limpidité etc ....).

Si au contraire $I_p$ est supérieur ou égal à Y1+Y2, l'ordinateur commande l'envoi d'eau oxygénée dans l'aérateur puis ladite augmentation d'aération de celui-ci pour rendre encore $I_p$ inférieur à Y1, l'oxygénation nécessaire étant dans le cas présent plus forte que précédemment, et l'on retourne ensuite au début du programme de gestion de la station pour attendre l'heure de la prochaine mesure.

Pour commander l'oxygénation l'ordinateur commande la mise en marche de la pompe doseuse PD et pour commander l'augmentation d'aération, il commande, dans le cas présent, l'ouverture des électrovannes V40 et V42, étant entendu qu'à l'heure de la prochaine mesure il commencera par commander l'arrêt de la pompe doseuse et la fermeture des électrovannes V40 et V42 avant d'exécuter la suite du programme.

Si V est supérieur ou égal à X1, l'ordinateur examine si V est en outre supérieur ou égal à une quantité X1+X2, X2 étant également fixé par les utilisateurs. Si ce n'est pas le cas, cela signifie que les boues se décantent mal et l'ordinateur commande alors un recyclage des boues c'est-à-dire la vidange des boues du clarificateur vers le stabilisateur (en commandant la mise en marche de la pompe P8) puis se branche à l'étape de contrôle de Ip (Ip supérieur ou égal à Y1 ?) étant entendu qu'à l'heure de la prochaine mesure l'ordinateur commencera par commander l'arrêt de la pompe P8 et agira aussi sur les autres organes éventuellement activés par lui à la suite des tests portant sur Ip (fermeture de l'électrovanes ou des électrovannes pour l'augmentation d'aération et arrêt de la pompe doseuse) avant d'exécuter la suite du programme.

Si au contraire V est supérieur ou égal à X1+X2, l'ordinateur commande le transfert des boues c'est-à-dire l'envoi des boues du stabilisateur vers l'aérateur (en commandant la mise en marche de la pompe P10) puis commande le recyclage des boues (vidange des boues du clarificateur vers le stabilisateur) et se branche ensuite à l'étape de contrôle de Ip (Ip supérieur ou égal à Y1 ?) étant entendu qu'à l'heure de la prochaine mesure l'ordinateur commencera par commander l'arrêt des pompes P8 et P10 et agira aussi sur les autres organes éventuellement activés par lui à la suite des tests portant sur Ip (fermeture de l'électrovanne ou des électrovannes pour l'augmentation d'aération et arrêt de la pompe doseuse) avant d'exécuter la suite du programme.

L'ordinateur commande les pompes P6, P8, P10 PD et les électrovannes V40 et V42 d'une façon classique, par l'intermédiaire de relais de puissance.

Le programme de gestion de la station peut être conçu de façon que les utilisateurs aient la possibilité de consulter à tout moment les résultats de mesures antérieures, de commander entre autres les électrovannes d'aération et l'envoi d'eau oxygénée dans l'aérateur, le recyclage et le transfert des boues et le système de mesure objet de l'invention, de redéfinir les heures de mesure, de mesurer le pH, la concentration d'oxygène et les températures mentionnés plus haut et de visualiser une mesure de l'indice de PONSAR si une telle mesure est en cours.

Tout ceci peut avantageusement être effectué à distance de la station par l'intermédiaire d'une ligne téléphonique, si l'on dispose par exemple d'un terminal du type MINITEL (marque déposée) et d'un modem (modulateur-démodulateur) ainsi que d'un logiciel de communication résident, installés sur l'ordinateur de la station et permettant d'utiliser cet ordinateur à partir du MINITEL (marque déposée).

La mesure de la limpidité de l'eau clarifiée peut être intégrée au programme de gestion du système de mesure de l'indice de PONSAR dont les étapes ont été données plus haut. Plus précisément, on peut prévoir dans ce programme une mesure de la limpidité de l'eau clarifiée entre les étapes 3 et 4 de ce programme.

Cette mesure comprend les étapes suivantes :

3a - remplissage de l'éprouvette d'un volume, de 0,5 litre par exemple, d'eau issue du clarificateur, la fin de ce remplissage étant détectée également par chronométrage (voir plus haut)

3b - montée de la tablette de l'éprouvette

3c - descente de la tablette de l'éprouvette

Si au cours de la montée de la tablette de l'éprouvette le faisceau lumineux issu de la photodiode 52 est transmis par l'eau contenue dans l'éprouvette, l'ordinateur considère qu'il s'agit effectivement d'eau clarifiée (limpidité bonne) et entreprend les mesures mentionnées plus haut. Si au contraire le faisceau lumineux n'est pas transmis, l'ordinateur considère qu'il s'agit d'eau boueuse (limpidité mauvaise) et agit en conséquence (voir plus haut).

L'introduction de la mesure de limpidité dans le programme de gestion du système de mesure nécessite la modification de l'étape 10 qui est remplacée par l'étape suivante :

– 10a - achèvement du remplissage de l'éprouvette (il reste à ajouter 1l d'eau clarifiée).

En outre, l'ordinateur peut effectuer les mesures de pH, de concentration d'oxygène et de température mentionnées plus haut et afficher les résultats de ces mesures pendant l'étape 27.

Sur la figure 6, on a représenté schématiquement un mode de réalisation avantageux du flacon 20, selon lequel la paroi externe de ce flacon épouse la forme d'un ellipsoide de révolution autour du grand axe de cet ellipsoide. Bien entendu, le flacon ne présente encore qu'une seule ouverture (en son extrémité supérieure) pour les divers remplissages et vidange. L'extrémité inférieure de la tige 68 est fixée au fond du flacon et s'étend suivant le grand axe de l'ellipsoide. Le lest 96 est encore fixé sous le flacon et contre celui-ci. Les ergots 100 sont fixés à la paroi externe du flacon, au niveau de la section transversale maximale de cette paroi.

La paroi interne du flacon peut également épouser la forme d'un ellipsoide de révolution qui a le même grand axe que le précédent et qui se raccorde à celui-ci juste au niveau de l'ouverture du flacon, cette ouverture ayant alors la forme d'un cercle (voir figure 6).

L'immersion, dans l'eau clarifiée du réservoir en cours de remplissage, du flacon décrit en se référant à la figure 6 est obtenue dans la majorité des cas, ce qui n'est pas toujours vrai pour les flacons du genre de celui qui est représenté sur la figure 2.

Bien entendu, l'ensemble flacon-tige 68-lest-ergots décrit en se référant à la figure 4 est encore conçu de façon que son centre de poussée soit à la verticale et au-dessus de son centre de gravité et que cet ensemble puisse atteindre, dans l'eau clarifiée du réservoir, les deux positions d'équilibre correspondant respectivement au flacon rempli d'eau clarifiée et au flacon rempli d'eau chargée de boue.

## Revendications

1. Appareil de mesure du poids apparent d'une boue chargeant un liquide, comprenant :
    – un récipient (18),
    – un flacon mobile (20), muni d'un moyen (68) lui permettant d'atteindre, dans le récipient, rempli de liquide clarifié, deux positions d'équilibre correspondant respectivement au flacon rempli de liquide clarifié et au flacon rempli de liquide chargé de boue,
    – des moyens de remplissage en liquide clarifié (P2, V17), de remplissage en liquide chargé de boue (P2, V23) et de vidange (P2, V22, V27) du flacon (20),
    – des moyens de remplissage en liquide clarifié (P1, V18) du récipient (18), jusqu'à un niveau maximum prédéterminé, et de vidange (V28) de ce récipient,
    – des premiers moyens de détection (26, 106, 108, 110), aptes à fournir un signal électrique fonction de la position d'équilibre du flacon dans le récipient (18), et
    – un système électronique de traitement (8, 10) prévu pour déterminer le poids apparent d'un volume de liquide chargé de boue, pesé dans le liquide clarifié, à partir de signaux électriques correspondant aux positions d'équilibre, dans le récipient (18) rempli de liquide clarifié, du flacon (20) rempli respectivement de liquide chargé de boue et de liquide clarifié, en commandant de façon appropriée les moyens de remplissage et de vidange du récipient et du flacon, caractérisé en ce que le flacon est en outre conçu pour que son bord supérieur se stabilise sous le niveau de liquide clarifié remplissant le récipient, en ce que les moyens de remplissage et de vidange du flacon sont prévus pour remplir celui-ci lorsqu'il est au fond du récipient de sorte que le flacon atteint ses positions d'équilibre à partir du fond du récipient, en ce que les premiers moyens de détection sont de type optoélectronique et prévus pour fournir ledit signal électrique après stabilisation du flacon dans le liquide clarifié et seulement lorsque le remplissage du récipient est terminé, la détermination du poids apparent étant ainsi effectuée en régime hydrostatique vrai.

2. Appareil selon la revendication 1, caractérisé en ce que le flacon (20) muni dudit moyen (68) est conçu pour avoir, lorsqu'il est rempli de liquide clarifié ou de liquide chargé de boue, un centre de poussée qui est situé au-dessus et à la verticale de son centre de gravité.

3. Appareil selon l'une quelconque des revendications 1 et 2, caractérisé en ce que le flacon (20) est en un matériau qui, lorsqu'il est plongé dans le liquide clarifié, n'absorbe pas celui-ci ou, au contraire, se sature rapidement en ce liquide clarifié.

4. Appareil selon l'une quelconque des revendications 1 à 3, caractérisé en ce que la paroi externe du flacon (20) épouse sensiblement la forme d'un ellipsoïde de révolution autour de son grand axe.

5. Appareil selon l'une quelconque des revendications 1 à 4, caractérisé en ce qu'il comprend en outre des moyens (98, 102) de support du flacon au fond du récipient (18).

6. Appareil selon l'une quelconque des revendications 1 à 5, caractérisé en ce qu'il comprend en outre une sonde à électrodes (78), prévue pour informer le système électronique de traitement (8, 10) du remplissage du flacon (20), cette sonde étant déplaçable et rendue rigidement solidaire d'un conduit (80) prévu pour les remplissages et la vidange du flacon lorsque ce dernier se trouve au fond du récipient (18).

7. Appareil selon la revendication 6, caractérisé en ce qu'il comprend un premier vérin à double effet (72), prévu pour déplacer la sonde (78) et le conduit (80).

8. Appareil selon l'une quelconque des revendications 1 à 7, caractérisé en ce que ledit moyen dont est muni le flacon comprend une tige (68) dont l'extrémité inférieure est rigidement solidaire du flacon (20), et dont la longueur est prévue pour qu'elle puisse dépasser, lorsque le flacon est au fond du récipient, le niveau maximum de liquide clarifié qu'est destiné à contenir le récipient (18).

9. Appareil selon l'une quelconque des revendications 1 à 8, caractérisé en ce que les premiers moyens de détection sont indépendants du flacon.

10. Appareil selon la revendication 9, caractérisé en ce que les premiers moyens de détection comprennent :

– un ensemble-détecteur comportant un moyen photo-émetteur (106) et un moyen photodétecteur (108), rendus solidaires et placés en regard l'un de l'autre, à l'extérieur du récipient et de manière que la lumière que le moyen photo-émetteur est capable d'émettre puisse être captée par le moyen photodétecteur après avoir traversé ce récipient, au moins la partie supérieure du flacon étant opaque à la lumière du moyen photo-émetteur, le récipient étant transparent à cette lumière, et

– des moyens de déplacement (26, 110) de cet ensemble-détecteur, aptes à déplacer celui-ci le long du récipient, sensiblement à partir du haut de ce dernier, et commandés par le système électronique de traitement (8, 10), le moyen photodétecteur étant destiné à informer ce système électronique de traitement de la position du flacon (20).

11. Appareil selon l'une quelconque des revendications 1 à 10, caractérisé en ce qu'il comprend des deuxièmes moyens de détection (22, 69, 103, 104), prévus pour détecter l'atteinte du niveau maximum de liquide clarifié dans le récipient (18) en vue de commander l'arrêt du remplissage de ce récipient (18).

12. Appareil selon la revendication 11, caractérisé en ce que les deuxièmes moyens de détection comprennent un flotteur (22) prévu pour flotter dans le récipient (18), à la surface du liquide clarifié, lorsque le récipient en contient, un moyen photo-émetteur (103) et un moyen photodétecteur (104) situés au-dessus du niveau maximum prédéterminé de liquide clarifié qu'est destiné à contenir le récipient (18), et une tige (69) fixée au flotteur (22) et en ce que l'extrémité supérieure de la tige (69) est prévue pour dévier un faisceau lumineux provenant du moyen photo-émetteur (103) en direction du moyen photodétecteur (104), lorsque cette extrémité supérieure rencontre ce faisceau lumineux.

13. Système de mesure de l'indice de PONSAR d'une boue chargeant un liquide, comprenant :

– un appareil de mesure du poids apparent de la boue chargeant le liquide,

– un autre récipient (28),

– des moyens de remplissage en liquide clarifié (P2, V16), de remplissage en liquide chargé de boue (P2, V25, V26) et de vidange (P2, V24, V27) de cet autre récipient,

– des troisièmes moyens de détection (32, 52, 54, 58) aptes à fournir d'autres signaux électriques, fonctions du niveau de boue décantée dans ledit autre récipient (28) préalablement rempli de liquide clarifié et de liquide chargé de boue,

le système électronique de traitement (8, 10) étant en outre prévu pour déterminer, à partir de ces autres signaux, le volume de boue décantée dans ledit autre récipient, correspondant à une quantité prédéterminée de liquide chargé de boue, et pour déterminer également l'indice de PONSAR de la boue, en utilisant ledit poids apparent et ledit volume de boue décantée, en commandant de façon appropriée les moyens de remplissage et de vidange,

caractérisé en ce que l'appareil de mesure du poids apparent est conforme à l'une quelconque des revendications 1 à 12.

14. Système selon la revendication 13, caractérisé en ce que les troisièmes moyens de détection comprennent :

– un autre ensemble-détecteur comportant un moyen photo-émetteur (52) et un moyen photodétecteur (54), rendus solidaires et placés en regard l'un de l'autre, à l'extérieur dudit autre récipient (28) et de telle manière que la lumière que ce moyen photo-émetteur est capable d'émettre puisse être captée par le moyen photodétecteur associé après avoir traversé ledit autre récipient, ce dernier et le liquide clarifié étant transparents à la lumière du moyen photo-émetteur et la boue étant opaque à cette lumière, et

– des moyens de déplacement (32, 58) de cet autre ensemble-détecteur, aptes à déplacer celui-ci le long dudit autre récipient (28), à partir du fond de ce dernier, et commandés par le système électronique de traitement (8, 10), le moyen photodétecteur dudit autre ensemble-détecteur étant destiné à informer ce système électronique de traitement de la position de la surface de séparation entre la boue décantée et le liquide clarifié dans ledit autre récipient.

15. Système selon l'une quelconque des revendications 13 et 14, caractérisé en ce que, la quantité prédéterminée de liquide chargé de boue résultant de l'adjonction à une quantité donnée de liquide clarifié atteignant un premier niveau dans ledit autre récipient (28), d'une quantité donnée de liquide chargé de boue atteignant un second niveau dans ledit autre récipient, le système de mesure comprend en outre une autre sonde à électrodes (44) déplaçable entre ces premier et second niveaux et prévue pour informer le système électronique de traitement (8, 10) de l'atteinte, par le liquide, successivement de ces premier et second niveaux, en vue de commander l'arrêt des remplissages correspondants.

16. Système selon la revendication 15, caractérisé en ce qu'il comprend en outre un autre vérin à double effet (48), prévu pour déplacer ladite autre sonde (44) entre les premier et second niveaux.

17. Procédé de conduite d'une station d'épuration d'eaux usées (EU) comprenant :
    – au moins un décanteur (DE) qui reçoit les eaux usées et dans lequel ces eaux usées se séparent en un liquide boueux et un liquide moins dense que ce dernier,
    – un stabilisateur (ST) auquel est envoyé le liquide boueux,
    – un aérateur (AE) auquel est envoyé le liquide moins dense et dans lequel ce liquide moins dense est aéré et agité, et
    – au moins un clarificateur (CL) auquel est envoyé le liquide de l'aérateur, et dans lequel est produit le liquide clarifié, le clarificateur étant en outre relié au stabilisateur de manière à pouvoir transférer la boue susceptible de se trouver dans le clarificateur vers le stabilisateur et ce dernier étant relié à l'aérateur de manière à pouvoir transférer le liquide boueux du stabilisateur vers l'aérateur, ce procédé étant caractérisé en ce qu'il utilise le système de mesure de l'indice de PONSAR selon l'une quelconque des revendications 13 à 16 et en ce qu'il comprend les étapes suivantes :
    – à une heure choisie dans un ensemble d'heures de mesure, on remplit au moins en partie ledit autre récipient (28) de liquide clarifié issu du clarificateur,
    – on contrôle la limpidité de cette eau clarifiée et si cette limpidité n'est pas bonne, on arrête l'arrivée de liquide dans l'aérateur en provenance du décanteur jusqu'à l'heure de mesure suivante,
    – si la limpidité est bonne, on mesure ledit volume de boue décantée V dans ledit autre récipient (28), ledit poids apparent P et l'indice de PONSAR Ip et si l'une de ces mesures ne peut être effectuée une alarme est déclenchée,
    – si au contraire toutes ces mesures ont pu être effectuées, on compare V à une valeur X1 déterminée,
    – si V est inférieur à X1, on compare Ip à une valeur déterminée Y1,
    – si Ip est inférieur à Y1, on attend l'heure de mesure choisie suivante,

    – si au contraire Ip est supérieur ou égal à Y1 mais inférieur à Y1+Y2, Y2 étant une valeur déterminée, on augmente l'aération dans l'aérateur (AE) jusqu'à l'heure de mesure suivante, alors que si Ip est supérieur à Y1+Y2, on oxygène le liquide de l'aérateur (AE) et l'on augmente l'aération de ce dernier jusqu'à l'heure de mesure choisie suivante,
    – si V est au contraire supérieur ou égal à X1 mais inférieur à X1+X2, X2 étant une valeur déterminée, on transfère la boue du clarificateur (CL) vers le stabilisateur (ST) et l'on se branche à l'étape de comparaison de Ip à Y1,
    – si au contraire V est supérieur ou égal à X1+X2, on transfère la boue du stabilisateur vers l'aérateur et la boue du clarificateur (CL) vers le stabilisateur (ST) et l'on se branche à l'étape de comparaison de Ip à Y1.

**Patentansprüche**

1. Apparat zum Messen des scheinbaren Gewichts eines in einer Flüssigkeit suspendierten Schlammes mit:
    – einem Behälter (18),
    – einer beweglichen Flasche (20), die mit einer Vorrichtung versehen ist, die ihr erlaubt, in dem mit geklärter Flüssigkeit gefüllten Behälter zwei Gleichgewichtsstellungen einzunehmen, die jeweils der mit geklärter Flüssigkeit gefüllten und der mit mit Schlamm beladenen Flüssigkeit gefüllten Flasche entsprechen,
    – Vorrichtungen zum Füllen mit geklärter Flüssigkeit (P2, V17), zum Füllen mit mit Schlamm beladener Flüssigkeit (P2, V23) und zum Leeren (P2, V22, V27) der Flasche (20),
    – Vorrichtungen zum Füllen mit geklärter Flüssigkeit (P1, V18) des Behälters bis auf ein vorgegebenes, maximales Niveau und zum Leeren (V28) dieses Behälters,
    – ersten Detektorvorrichtungen (26, 106, 108, 110), die geeignet sind, ein elektrisches Signal in Abhängigkeit von der Gleichgewichtsposition der Flasche in dem Behälter (18) zu erzeugen, und
    – einem elektronischen Verarbeitungssystem (8, 10), das vorgesehen ist, das scheinbare Gewicht eines Volumens der mit Schlamm beladenen Flüssigkeit, das in der geklärten Flüssigkeit gewogen wird, ausgehend von elektrischen Signalen, die den Gleichgewichtspositionen der jeweils mit mit Schlamm beladenen Flüssigkeit und mit geklärter Flüssigkeit gefüllten Flasche (20) in dem mit geklärter Flüssigkeit gefüllten Behälter (18) entsprechen, zu bestimmen und auf geeignete Weise die Füll- und Leerungsvorrichtungen für den Behälter und die Flasche zu steuern, dadurch gekennzeichnet, daß die Flasche außerdem so aufgebaut ist, daß ihr oberer Rand sich unter dem Niveau der den Behälter füllenden, geklärten Flüssigkeit stabilisiert, daß die Füll- und Leerungsvorrichtungen für die Flasche vorgesehen sind, diese zu füllen, wenn sie sich am Boden des Behälters befindet, so daß die Flasche ihre Gleichgewichtsstellungen vom Boden des Behälters aus erreicht, daß die ersten Detektorvorrichtungen vom optoelektronischen Typ sind und dazu vorgesehen sind, das elektrische Signal nach der Stabilisierung der Flasche in der geklärten Flüssigkeit und nur nach dem Beenden des Auffüllens des Behälters mit geklärter Flüssigkeit zu erzeugen, so daß die Bestimmung des scheinbaren Gewichts im wahren hydrostatischen Bereich durchgeführt wird.

2. Apparat nach Anspruch 1, dadurch gekennzeichnet, daß die mit der Vorrichtung (68) versehene Flasche (20) so aufgebaut ist, daß sie, wenn sie mit geklärter oder mit mit Schlamm beladener Flüssigkeit gefüllt ist, einen Auftriebsschwerpunkt besitzt, der oberhalb und in der Vertikalen ihres Schwerpunktes liegt.

3. Apparat nach einem der Ansprüche 1 und 2, dadurch gekennzeichnet, daß die Flasche (20) aus einem Material besteht, das, wenn es in der geklärten eingetaucht ist, diese nicht absorbiert oder, im Gegenteil, sich schnell mit dieser geklärten Flüssigkeit sättigt.

4. Apparat nach einem der Ansprüche 1 bis 3, dadurch gekennzeichnet, daß die äußere Wand der Flasche ( 20 ) im wesentlichen die Form eines Drehellipsoiden um seine Hauptachse einnimmt.

5. Apparat nach einem der Ansprüche 1 bis 4, dadurch gekennzeichnet, daß er außerdem Vorrichtungen (98, 102) zum Halten der Flasche am Boden des Behälters (18) aufweist.

6. Apparat nach einem der Ansprüche 1 bis 5, dadurch gekennzeichnet, daß er außerdem eine Elektrodensonde (78) aufweist, die vorgesehen ist, das elektronische Verarbeitungssystem (8, 10) über die Füllung der Flasche (20) zu informieren, wobei diese Sonde beweglich ist und fest mit einer Leitung (80) verbunden ist, die für die Füllungen und das Leeren der Flasche vorgesehen ist, wenn sich letztere am Boden des Behälters (18) befindet.

7. Apparat nach Anspruch 6, dadurch gekennzeichnet, daß er einen ersten Zweiwegezylinder (72) umfaßt, der zum Bewegen der Sonde (78) und der Leitung (80) vorgesehen ist.

8. Apparat nach einem der Ansprüche 1 bis 7, dadurch gekennzeichnet, daß die Vorrichtung, mit der die Flasche versehen ist, einen Stange (68) umfaßt, deren unteres Ende fest an der Flasche (20) befestigt ist und deren Länge derart vorgesehen ist, daß sie, wenn sich die Flasche am Boden des Behälters befindet, das maximale Niveau der geklärten Flüssigkeit, die der Behälter (18) enthalten soll, übersteigen kann.

9. Apparat nach einem der Ansprüche 1 bis 8, dadurch gekennzeichnet, daß die ersten Detektorvorrichtungen von der Flasche unabhängig sind.

10. Apparat nach Anspruch 9, dadurch gekennzeichnet, daß die ersten Detektorvorrichtungen umfassen:
    – eine Detektoranordnung, die eine Photoemittervorrichtung (106) und eine Photodetektorvorrichtung (108) aufweist, die am Äußeren des Behälters einander gegenüberliegend fest und solcher Art angeordnet sind, daß das Licht, das der Photoemitter emittieren kann, von der Photodetektorvorrichtung nach dem Durchlaufen des Behälters aufgefangen werden kann, wobei wenigsten der obere Bereich der Flasche für das Licht der Photoemittervorrichtung undurchsichtig ist und der Behälter für dieses Licht durchsichtig ist, und
    – Vorrichtungen zum Bewegen (26, 110) dieser Detektoranordnung, die geeignet sind, diese entlang des Behälters im wesentliche von oben desselben zu bewegen, und die von dem elektronischen Verarbeitungssystem (8, 10) gesteuert werden, wobei die Photodetektorvorrichtung dazu bestimmt ist, dieses elektronische Verarbeitungssystem über die Position der Flasche zu informieren.

11. Apparat nach einem der Ansprüche 1 bis 10, dadurch gekennzeichnet, daß er zweite Detektorvorrichtungen (22, 69, 103, 104) umfaßt, die geeignet sind, das Erreichen des maximalen Niveaus der geklärten Flüssigkeit in dem Behälter (18) festzustellen, um das Anhalten des Füllens dieses Behälters (18) zu steuern.

12. Apparat nach Anspruch 11, dadurch gekennzeichnet, daß die zweiten Detektorvorrichtungen einen Schwimmer (22), der dazu vorgesehen ist, in dem Behälter (18) auf der Oberfläche der geklärten Flüssigkeit zu schwimmen, wenn der Behälter eine solche enthält, eine Photoemittervorrichtung (103) und eine Photodetektorvorrichtung (104), die sich oberhalb des vorgegebenen, maximalen Niveaus der geklärten Flüssigkeit, die der Behälter (18) enthalten soll, befinden, und eine an dem Schwimmer (22) befestigte Stange (69) umfassen und daß das obere Ende der Stange (69) dazu vorgesehen ist, einen von der Photoemittervorrichtung (103) kommenden Lichtstrahl in Richtung der Photodetektorvorrichtung (104) abzulenken, wenn dieses obere Ende auf diesen Lichtstrahl trifft.

13. System zum Messen des Ponsarindex eines in einer Flüssigkeit suspendierten Schlammes mit:
— einem Apparat zum Messen der scheinbaren Gewichts des in der Flüssigkeit suspendierten Schlammes,
— einem weiteren Behälter (28),
— Vorrichtungen zum Füllen mit geklärter Flüssigkeit (P2, V16), zum Füllen mit mit Schlamm beladener Flüssigkeit (P2, V25, V26) und zum Leeren (P2, V24, V27) dieses weiteren Behälters,
— dritten Detektorvorrichtungen ( 32, 52, 54, 58 ), die geeignet sind, weitere elektrische Signale in Abhängigkeit von dem Niveau des in den weiteren Behälter (28) vor dem Füllen mit geklärter Flüssigkeit und mit mit Schlamm beladener Flüssigkeit dekantierten Schlammes zu erzeugen,
wobei das elektronische Verarbeitungssystem (8, 10) außerdem dazu vorgesehen ist, ausgehend von diesen weiteren Signalen das Volumen des in den weiteren Behälter dekantierten Schlammes zu bestimmen, welches einer vorgegebenen Menge der mit Schlamm beladenen Flüssigkeit entspricht, und außerdem den Ponsarindex des Schlammes unter Verwendung des scheinbaren Gewichts und des Volumens des dekantierten Schlammes zu bestimmen, indem es in geeigneter Weise die Füll- und Leerungsvorrichtungen steuert,
dadurch gekennzeichnet, daß der Apparat zum Messen des scheinbaren Gewichts entsprechend einem der Ansprüche 1 bis 12 ist.

14. System nach Anspruch 13, dadurch gekennzeichnet, daß die dritten Detektorvorrichtungen umfassen:
— eine weitere Detektoranordnung, die eine Photoemittervorrichtung (52) und eine Photodetektorvorrichtung (54) aufweist, die am Äußeren des weiteren Behälters (28) einander gegenüberliegend fest und solcher Art angeordnet sind, daß das Licht, das der Photoemitter emittieren kann, von der entsprechenden Photodetektorvorrichtung nach dem Durchlaufen des Behälters aufgefangen werden kann, wobei letzterer und die geklärte Flüssigkeit für das Licht der Photoemittervorrichtung durchsichtig ist und der Schlamm für dieses Licht undurchsichtig ist, und
— Vorrichtungen zum Bewegen (32, 58) dieser weiteren Detektoranordnung, die geeignet sind, diese entlang des weiteren Behälters (28) im wesentlichen vom Boden desselben zu bewegen, und die von dem elektronischen Verarbeitungssystem (8, 10) gesteuert werden, wobei die Photodetektorvorrichtung dieser weiteren Detektoranordnung dazu bestimmt ist, dieses elektronische Verarbeitungssystem über die Position der Grenzfläche zwischen dem dekantierten Schlamm und der geklärten Flüssigkeit in dem weiteren Behälter zu informieren.

15. System nach einem der Ansprüche 13 und 14, dadurch gekennzeichnet, daß, wenn die vorgegebene Menge der mit Schlamm beladenen Flüssigkeit aus dem Hinzufügen einer gegebenen Menge von mit Schlamm beladender Flüssigkeit, die ein zweites Niveau in dem weiteren Behälter erreicht, zu einer gegebenen Menge der geklärten Flüssigkeit, die ein erstes Niveau in dem weiteren Behälter (28) erreicht, resultiert, das Meßsystem außerdem eine weitere Elektrodensonde (44) umfaßt, die zwischen den ersten und zweiten Niveaus beweglich ist und dazu vorgesehen ist, das elektronische Verarbeitungssystem (8, 10) über das sukzessive Erreichen der ersten und zweiten Niveaus durch die Flüssigkeit zu informieren, um das Anhalten der entsprechenden Füllungen zu steuern.

16. System nach Anspruch 15, dadurch gekennzeichnet, daß es außerdem einen weiteren Zweiwegezylinder (48) umfaßt, der dazu vorgesehen ist, die weitere Sonde (44) zwischen den ersten und zweiten Niveaus zu bewegen.

17. Verfahren zum Betreiben einer Reinigungsstation für verbrauchtes Wasser (EU), welche umfaßt:
— wenigstens einen Dekantierer (DE), der das verbrauchte Wasser empfängt und in dem sich das verbrauchte Wasser in eine schlammige Flüssigkeit und eine Flüssigkeit, die weniger dicht als letztere ist, trennt,
— einen Stabilisator (ST), in den die schlammige Flüssigkeit geschickt wird,
— einen Belüfter (AE), zu dem die weniger dichte Flüssigkeit geschickt wird und in dem diese weniger dichte Flüssigkeit belüftet und gerührt wird, und
— wenigstens eine Klärvorrichtung (CL), zu dem die Flüssigkeit des Belüfters geschickt wird und in dem die geklärte Flüssigkeit erzeugt wird, wobei die Klärvorrichtung außerdem mit dem Stabilisator derart verbunden ist, daß der Schlamm, der geeignet ist, sich in der Klärvorrichtung zu befinden, in den Stabilisator gebracht werden kann, und wobei letzterer derart mit dem Belüfter verbunden ist, daß die schlammige Flüssigkeit des Stabilisators in den Belüfter gebracht werden kann,

wobei dieses Verfahren dadurch gekennzeichnet ist, daß es das System zum Messen des Ponsarindex nach einem der Ansprüche 13 bis 16 verwendet und daß es folgende Verfahrensschritte umfaßt:

– zu einer gegebenen Stunde in einer Reihe von Meßzeit füllt man wenigstens teilweise den weiteren Behälter (28) mit geklärter, von der Klärvorrichtung kommender Flüssigkeit,

– man kontrolliert die Durchsichtigkeit dieses geklärten Wassers, und wenn diese Durchsichtigkeit nicht gut ist, unterbricht man den Zufluß der von dem Dekantierer kommenden Flüssigkeit in den Belüfter bis zur folgenden Meßzeit,

– wenn die Durchsichtigkeit gut ist, mißt man das Volumen V des in den weiteren Behälter (28) dekantierten Schlammes, das scheinbare Gewicht P und den Ponsarindex Ip, und wenn eine dieser Messungen nicht ausgeführt werden kann, wird ein Alarm ausgelöst,

– wenn jedoch all diese Messungen durchgeführt werden konnten, vergleicht man V mit einem vorgegebenen Wert X1,

– wenn V kleiner als X1 ist, vergleicht man Ip mit einem vorgegebenen Wert Y1,

– wenn Ip kleiner als Y1 ist, wartet auf die folgende, ausgewählte Meßzeit,

– wenn jedoch Ip größer oder gleich Y1 aber kleiner als Y1+Y2 ist, wobei Y2 ein vorgegebener Wert ist, erhöht man die Belüftung in dem Belüfter (AE), bis zur folgenden Meßzeit, während man, wenn Ip größer als Y1+Y2 ist, die Flüssigkeit des Belüfters (AE) mit Sauerstoff versetzt und die Belüftung der letzteren bis zur ausgewählten, folgenden Meßzeit erhöht,

– wenn jedoch V größer oder gleich X1, aber kleiner als X1+X2 ist, wobei X2 ein vorgegebener Wert ist, bringt man den Schlamm der Klärvorrichtung (CL) zum Stabilisator (ST) und geht zum Vergleichsschritt von Ip mit Y1,

– wenn jedoch V größer oder gleich X1+X2 ist, bringt man den Schlamm des Stabilisators zum Belüfter und den Schlamm der Klärvorrichtung (CL) zum Stabilisator (ST) und man geht zum Vergleichsschritt von Ip mit Y1.

**Claims**

1. Apparatus for measuring the apparent weight of a sludge loading a liquid, comprising:
   – a container (18),
   – a movable flask (20), provided with a means (68) enabling it to reach, in the container, filled with clarified liquid, two equilibrium positions corresponding respectively to the flask filled with clarified liquid and to the flask filled with sludge-laden liquid,
   – means of filling with clarified liquid (P2, V17), of filling with sludge-laden liquid (P2, V23) and of emptying (P2, V22, V27) the flask (20),
   – means of filling the container (18) with clarified liquid (P1, V18), up to a predetermined maximum level, and of emptying (V28) this container,
   – first means of detection (26, 106, 108, 110), able to deliver an electrical signal dependent upon the equilibrium position of the flask in the container (18), and
   – an electronic processing system (8, 10) provided for determining the apparent weight of a volume of sludge-laden liquid, weighed in the clarified liquid, from electrical signals corresponding to the equilibrium positions, in the container (18) filled with clarified liquid, of the flask (20) filled respectively with sludge-laden liquid and with clarified liquid, by appropriately controlling the means of filling and of emptying of the container and of the flask, characterised in that the flask is furthermore designed so that its upper rim stabilises beneath the level of clarified liquid filling the container, in that the means of filling and of emptying of the flask are provided in order to fill the latter when it is at the bottom of the container so that the flask reaches its equilibrium positions from the bottom of the container, in that the first means of detection are of optoelectronic type and are provided in order to deliver the said electrical signal after stabilisation of the flask in the clarified liquid and only when the filling of the container is completed, the determination of the apparent weight thus being performed under true hydrostatic conditions.

2. Apparatus according to Claim 1, characterised in that the flask (20) provided with the said means (68) is designed to have, when it is filled with clarified liquid or with sludge-laden liquid, a centre of thrust which is situated above and vertically in line with its centre of gravity.

3. Apparatus according to either one of Claims 1 or 2, characterised in that the flask (20) is made of a material which, when it is immersed in the clarified liquid, does not absorb the latter or, on the contrary, rapidly saturates in this clarified liquid.

4. Apparatus according to any one of Claims 1 to 3, characterised in that the outer wall of the flask (20) substantially follows the shape of an ellipsoid of revolution about its major axis.

5. Apparatus according to any one of Claims 1 to 4, characterised in that it furthermore comprises means (98, 102) of supporting the flask at the bottom of the container (18).

6. Apparatus according to any one of Claims 1 to 5, characterised in that it furthermore comprises a probe with electrodes (78), which is provided in order to notify the electronic processing system (8, 10) of the filling of the flask (20), this probe being displaceable and joined rigidly to a pipe (80) provided for the filling operations and emptying of the flask when the latter is at the bottom of the container (18).

7. Apparatus according to Claim 6, characterised in that it comprises a first double-action jack (72) provided in order to displace the probe (78) and the pipe (80).

8. Apparatus according to any one of Claims 1 to 7, characterised in that the said means with which the flask is provided comprises a rod (68) whose lower end is rigidly joined to the flask (20), and the length of which is provided in order that, when the flask is at the bottom of the container, it can pass beyond the maximum level of clarified liquid which the container (18) is intended to hold.

9. Apparatus according to any one of Claims 1 to 8, characterised in that the first means of detection are independent of the flask.

10. Apparatus according to Claim 9, characterised in that the first means of detection comprise:
    – a detector-unit including a photoemitter means (106) and a photodetector means (108), which are joined together and placed facing one another, outside the container and in such a way that the light which the photoemitter means is able to emit can be sensed by the photodetector means after having crossed this container, at least the upper part of the flask being opaque to the light from the photoemitter means, the container being transparent to this light, and
    – means (26, 110) of displacing this detector-unit which are able to displace the latter along the container, substantially from the top of the latter, and which are controlled by the electronic processing system (8, 10), the photodetector means being intended to notify this electronic processing system of the position of the flask (20).

11. Apparatus according to any one of Claims 1 to 10, characterised in that it comprises second means of detection (22, 69, 103, 104), provided in order to detect the reaching of the maximum level of clarified liquid in the container (18) with a view to ordering the halting of the filling of this container (18).

12. Apparatus according to Claim 11, characterised in that the second means of detection comprise a float (22) provided in order to float in the container (18), at the surface of the clarified liquid, when the container holds some, a photoemitter means (103) and a photodetector means (104) which are situated above the predetermined maximum level of clarified liquid which the container (18) is intended to hold, and a rod (69) fixed to the float (22) and in that the upper end of the rod (69) is provided in order to deflect a light beam coming from the photoemitter means (103) towards the photodetector means (104), when this upper end encounters this light beam.

13. System for measuring the PONSAR index of a sludge loading a liquid, comprising:
    – an apparatus for measuring the apparent weight of the sludge loading the liquid,
    – another container (28),
    – means of filling with the clarified liquid (P2, V16), of filling with sludge-laden liquid (P2, V25, V26) and of emptying (P2, V24, V27) this other container,
    – third means of detection (32, 52, 54, 58) able to deliver other electrical signals, which are dependent upon the level of sludge decanted into the said other container (28) previously filled with clarified liquid and with sludge-laden liquid,
    the electronic processing system (8, 10) being furthermore provided in order to determine, from these other signals, the volume of sludge decanted into the said other container, corresponding to a predetermined quantity of sludge-laden liquid, and likewise to determine the PONSAR index of the sludge, by using the said apparent weight and the said volume of decanted sludge, by appropriately controlling the means of filling and of emptying, characterised in that the apparatus for measuring the apparent weight is in accordance with any one of Claims 1 to 12.

14. System according to Claim 13, characterised in that the third means of detection comprise:
- another detector-unit including a photoemitter means (52) and a photodetector means (54), joined together and placed facing one another, outside the said other container (28) and in such a way that the light which this photoemitter means is able to emit can be sensed by the associated photodetector means after having crossed the said other container, the latter and the clarified liquid being transparent to the light from the photoemitter means and the sludge being opaque to this light, and
- means (32, 58) of displacing this other detector-unit and able to displace the latter along the said other container (28), from the bottom of the latter, and which are controlled by the electronic processing system (8, 10), the photodetector means of the said other detector-unit being intended to notify this electronic processing system of the position of the surface of separation between the decanted sludge and the clarified liquid in the said other container.

15. System according to either one of Claims 13 or 14, characterised in that, the predetermined quantity of sludge-laden liquid resulting from the addition, to a given quantity of clarified liquid reaching a first level in the said other container (28), of a given quantity of sludge-laden liquid reaching a second level in the said other container, the measuring system furthermore comprises another probe with electrodes (44) which is displaceable between these first and second levels and is provided in order to notify the electronic processing system (8, 10) of the reaching, by the liquid, of these first and second levels in succession, with a view to ordering the halting of the corresponding filling operations.

16. System according to Claim 15, characterised in that it furthermore comprises another double-action jack (48) provided in order to displace the said other probe (44) between the first and second levels.

17. Method of running a waste water purification station (EU) comprising:
- at least one decanter (DE) which receives the waste water and in which this waste water is separated into a sludgy liquid and a liquid which is less dense than the latter,
- a stabiliser (ST) to which the sludgy liquid is sent,
- an aerator (AE) to which the less dense liquid is sent and in which this less dense liquid is aerated and agitated, and

- at least one clarifier (CL) to which the liquid from the aerator is sent, and in which the clarified liquid is produced, the clarifier furthermore being connected to the stabiliser in such a way as to be able to transfer the sludge liable to be found in the clarifier to the stabiliser and the latter being connected to the aerator so as to be able to transfer the sludgy liquid from the stabiliser to the aerator,

this method being characterised in that it uses the system for measuring the PONSAR index according to any one of Claims 13 to 16 and in that it comprises the following steps:
- at a time chosen from a set of measuring times, the said other container (28) is at least partly filled with clarified liquid output by the clarifier,
- the limpidity of this clarified water is checked and if this limpidity is not good, the intake of liquid into the aerator coming from the decanter is halted until the next measuring time,
- if the limpidity is good, the said volume of sludge V decanted into the said other container (28), the said apparent weight P and the PONSAR index Ip are measured, and if one of these measurements cannot be made an alarm is triggered,
- if on the contrary all these measurements were able to be made, V is compared with a specified value X1,
- if V is less than X1, Ip is compared with a specified value Y1,
- if Ip is less than Y1, the next chosen measuring time is awaited,
- if on the contrary Ip is greater than or equal to Y1 but less than Y1+Y2, Y2 being a specified value, the aeration in the aerator (AE) is increased until the next measuring time, whereas if Ip is greater than Y1+Y2, the liquid from the aerator (AE) is oxygenated and the aeration of the latter is increased until the next chosen measuring time,
- if on the contrary V is greater than or equal to X1 but less than X1+X2, X2 being a specified value, the sludge is transferred from the clarifier (CL) to the stabiliser (ST) and a branch is made to the step for comparing Ip with Y1,
- if on the contrary V is greater than or equal to X1+X2, the sludge is transferred from the stabiliser to the aerator and the sludge from the clarifier (CL) to the stabiliser (ST) and a branch is made to the step for comparing Ip with Y1.

FIG. 1

FIG. 6

FIG. 2

FIG. 3

FIG. 4

FIG. 5

FIG. 7

EP 0 349 437 B1

FIG. 8